# EUROPEAN PATENT APPLICATION

(11) **EP 4 509 974 A1**
(43) Date of publication of application: **19.02.2025**
(21) Application number: 24193410.8
(22) Date of filing: 07.08.2024
(51) Int. Cl.: G06F 3/12

(54) **STORAGE MEDIUM, APPLICATION PROGRAM, CONTROL METHOD FOR INFORMATION PROCESSING APPARATUS, AND INFORMATION PROCESSING APPARATUS**

(30) Priority: 08.08.2023 JP 2023129009
(71) Applicant: CANON KABUSHIKI KAISHA, Tokyo 146-8501 (JP)
(72) Inventor: SAITO, Kazuyuki, Tokyo, 146-8501 (JP)
(74) Representative: Canon Europe Limited

(57) **Abstract**

A control method for an information processing apparatus (101), wherein the information processing apparatus is configured to store a printing settings application (112), display a printing settings screen (1201, 1202) for setting a printing settings value provided to a printer driver (111, 113), wherein the printer driver generates printing settings information in accordance with Internet Printing Protocol, the control method comprising: acquiring to-be-printed intermediate image data provided by an operating system (114) of the information processing apparatus; editing the acquired intermediate image data according to a setting value of a setting item set on the printing settings screen (1201, 1202); sending print data based on the edited intermediate image data; and sending a value different from the value set via the printing settings screen (1201, 1202) as the setting value of the setting item corresponding to the print data.

## Description

### FIELD OF THE INVENTION

The present invention relates to a storage medium, an application program, a control method for an information processing apparatus, and an information processing apparatus.

### BACKGROUND OF THE INVENTION

### Description of the Related Art

There is a concept of a general-purpose printer driver (local printer driver) that communicates directly with image forming devices using industry-standard protocols such as the Internet Printing Protocol (IPP). The local printer driver is a driver provided by the vendor (manufacturer) of an operating system (OS) on a client terminal. The local printer driver is a printer driver that generates print data that can be interpreted by printers of multiple models from multiple printer vendors. The local printer driver can communicate with printers from multiple printer vendors.

Therefore, using the local printer driver allows users to send print jobs to image forming devices without installing vendor-specific printer drivers.

Additionally, there is a concept of printing using cloud print services. In cloud print services, a printer driver (cloud printer driver) for each cloud print service is installed on an information processing apparatus. The cloud printer driver is also a driver provided by the OS vendor providing an OS on a client terminal, and is a printer driver that generates print data that can be interpreted by printers from multiple printer vendors. In each cloud print service, an information processing apparatus sends a print job to the cloud print service using a cloud printer driver, and the cloud print service sends the print job to an image forming device to execute printing.

Because the local printer driver and cloud printer driver mentioned above handle print jobs to be printed by image forming devices from various vendors, there are limitations on the items and functions that can be configured as printing settings. Therefore, it is conceivable to extend the printing settings, in association with the printer driver, by utilizing identification information of a printer associated with the printer driver (see Japanese Patent Laid-Open No. 2020-126370). This makes it possible to realize printing settings user interfaces (UIs) and print job editing functions that are unique to each vendor.

A printing settings extension application that extends the functionality of a general-purpose printer driver is capable of receiving intermediate image data from the general-purpose printer driver and editing the intermediate image data. Editing the intermediate image data on the printing settings extension application side enables, for example, preview display that reflects the printing settings. Among the printing-related setting items are those which can be processed by both the printing settings extension application and the printing device. For such setting items, it is necessary to prevent any overlap in processing between the printing settings extension application and the printing device.

### SUMMARY OF THE INVENTION

The present invention in its first aspect provides a control method for an information processing apparatus as specified in claims 1-6 .

The present invention in its second aspect provides a storage medium as specified in claim 6.

The present invention in its third aspect provides an information processing apparatus as specified in claim 8.

Further features of the present invention will become apparent from the following description of embodiments with reference to the attached drawings.

### BRIEF DESCRIPTION OF THE DRAWINGS

Fig. 1 is a diagram illustrating an example of a system configuration.
Figs. 2A to 2E are diagrams illustrating examples of hardware configurations.
Figs. 3A to 3C are diagrams illustrating an example of a sequence according to a first embodiment.
Figs. 4A to 4C are diagrams illustrating an example of an app function table according to the first embodiment.
Figs. 5A to 5C are diagrams illustrating an example of an attribute value table according to the first embodiment.
Figs. 6A and 6B are diagrams illustrating an example of an attribute value table generation process and a printing settings determination process according to the first embodiment.
Fig. 7 is a diagram illustrating an example of a table for correcting printing attribute information in the first embodiment.
Figs. 8A to 8C are diagrams illustrating an example of a sequence according to a second embodiment.
Figs. 9A and 9B are diagrams illustrating an example of a function table according to a third embodiment.
Figs. 10A to 10C are diagrams illustrating an example of an attribute value table according to the third embodiment.
Fig. 11 is a flowchart illustrating an example of an attribute value table generation process according to the third embodiment.
Fig. 12A includes diagrams illustrating examples of a first printing settings UI according to the present embodiment.
Fig. 12B includes parts (a) and (b) which are diagrams each illustrating an example of the first printing settings UI according to the present embodiment.
Figs. 13A and 13B are diagrams each illustrating an example of a preview UI according to the present embodiment.
Figs. 14A and 14B are flowcharts each illustrating an example of a preview UI internal process according to the present embodiment.
Fig. 15 is a flowchart illustrating an example of a printing attribute information setting process according to the present embodiment.

### DESCRIPTION OF THE EMBODIMENTS

Hereinafter, embodiments of the present invention will be described with reference to the drawings.

### First Embodiment

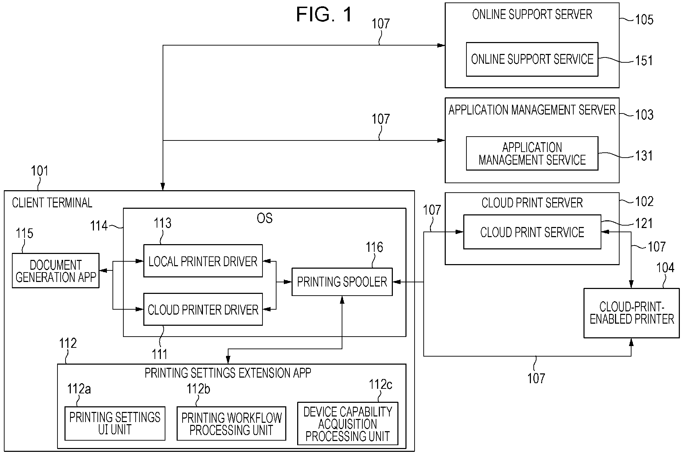

Fig. 1 is a configuration diagram of a printing system in cloud printing according to a first embodiment. A client terminal 101, a cloud print server 102, an application management server 103, a cloud-print-enabled printer 104 (hereinafter referred to as the printer 104), and an online support server 105 are connected via a network 107.

Although Fig. 1 depicts one client terminal 101 and one cloud-print-enabled printer 104, there may be multiple client terminals 101 and printers 104.

The cloud print server 102, the application management server 103, and the online support server 105 may also be server systems composed of multiple information processing apparatuses. By configuring each server as a server system composed of multiple information processing apparatuses, it is possible to distribute the load across these information processing apparatuses.

Additionally, the cloud print server 102, the application management server 103, and the online support server 105 may be virtually configured within a single physical information processing apparatus.

The network 107 assumes to establish connections to cloud services via a wide area network (WAN) such as the Internet, but it may also be a closed environment such as an internal local area network (LAN).

The client terminal 101 is an information processing apparatus such as a personal computer (PC), tablet, smartphone, etc., and is a terminal operated directly by a user. Any application software can be executed on the client terminal 101.

A local printer driver 113 and a cloud printer driver 111 are printer drivers provided by the OS vendor (manufacturer) providing an operating system (OS) 114 on the client terminal 101. The local printer driver 113 and the cloud printer driver 111 are printer drivers that generate print data that can be interpreted by printers from multiple printer vendors. The local printer driver 113 is a printer driver used when connecting the printer 104 and the client terminal 101 without going through a server. The cloud printer driver 111 is a printer driver used when utilizing a cloud print service 121 provided by the OS vendor. Information about the printer 104 is registered in advance with the cloud print service 121. The client terminal 101 specifies the printer 104 as the output destination of print data generated by the cloud printer driver 111, and sends the print data to the cloud print service 121. When the cloud print service 121 sends the print data to the printer 104 specified from the client terminal 101, printing is executed.

Note that the local printer driver 113 and the cloud printer driver 111 are already stored in a storage unit 214 of the client terminal 101 by the time the client terminal 101 is shipped.

A printing spooler 116 is a printing-related function provided by the OS 114. The printing spooler 116 has the function of storing intermediate data and print data received from the local printer driver 113 and the cloud printer driver 111 in a temporary storage area. The print data stored in the temporary storage area may be retrieved by a printing settings extension app 112 or sent to the cloud print server 102 and the printer 104.

The printing settings extension app 112 is a printing settings application provided by one of the aforementioned printer vendors, which provides a printer for use in printing. The printing settings extension app 112 is an application that is not stored in the storage unit 214 at the time the client terminal 101 is shipped. The printing settings extension app 112 is downloaded from the application management server 103 when the user performs a certain operation on the client terminal 101. The certain operation may be, for example, an operation for connecting the client terminal 101 and the printer 104, an operation for sending print data from the client terminal 101 to the printer 104 via the cloud print service 121, and the like. The certain operation may further be the user acquiring the printing settings extension app 112 from an application store provided by an application management service 131. The printing settings extension app 112 extends functionality regarding the printing settings of the local printer driver 113 and the cloud printer driver 111 via the printing spooler 116 of the OS 114.

The cloud-print-enabled printer 104 is a device that actually prints to a recording medium such as paper, and is an image forming device that converts print data received via the network 107 into image data and prints it.

A printing settings UI unit 112a is a printing settings UI extended by the printer vendor in the printing settings extension app 112, and provides the printing settings UI to the user.

The printing settings UI unit 112a generates and displays a printing settings UI based on capability information acquired by the OS 114 and the printing settings extension app 112 from the local printer 104 and the cloud print service 121.

A printing workflow processing unit 112b receives from the printing spooler 116 intermediate image data of images and graphics expressed in the Extensible Markup Language (XML) format, such as XML Paper Specification (XPS). The printing workflow processing unit 112b performs Page Description Language (PDL) conversion processing to convert the received data in XPS format into PDL data that the printer can process. In the present embodiment, a print preview is displayed by the printing workflow processing unit 112b. An image to be printed can be displayed as a preview by utilizing the printing workflow processing unit 112b. Additionally, a preview image that reflects the color mode and imposition can be provided by utilizing the printing workflow processing unit 112b.

A device capability acquisition processing unit 112c is a module that operates the OS 114 to acquire the capability information of the printer 104, and updates device capability information managed by the OS 114 based on the acquired capability information.

A document generation app 115 is a general application such as a document file generation app, a spreadsheet app, a presentation app, and the like. These applications may be pre-installed on the OS 114 or may be downloaded and installed by the user.

The cloud print server 102 is a server device for providing the cloud print service 121 provided by the OS vendor. In the present embodiment, the cloud print server 102 accepts print instructions and print data from the client terminal 101. The cloud print server 102 then provides services to the user by sending the received print data to the printer 104.

The application management server 103 stores and manages various applications.

The application management server 103 receives the identification information of and a download request for an application from the client terminal 101, and sends the application identified based on the received identification information to the client terminal 101.

The online support server 105 is a server device that provides an online support service 151. The online support service 151 is a service for providing the client terminal 101 with a file containing information for extending the functionality of the client terminal 101.

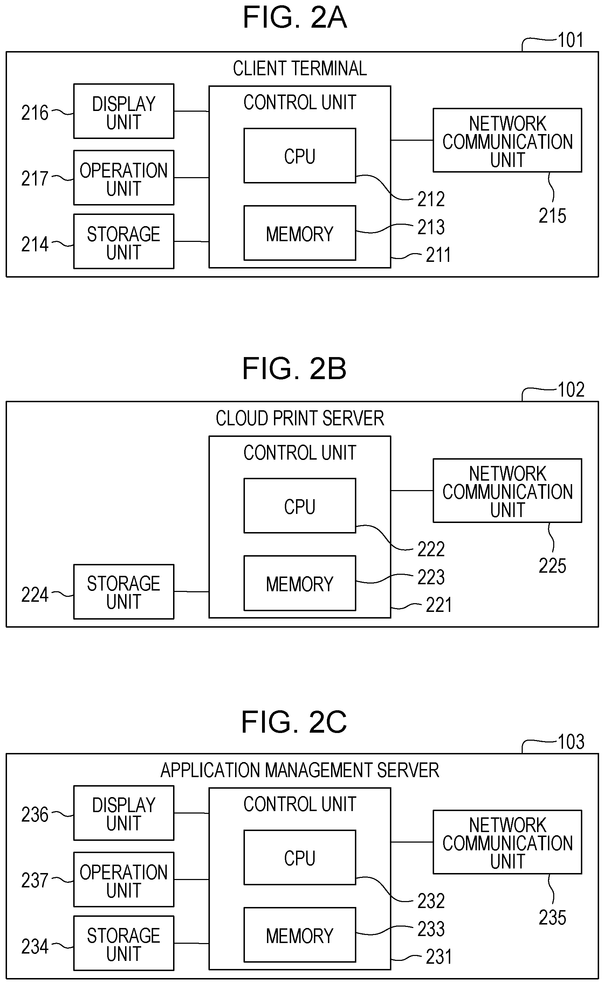

Next, hardware configurations in the system in the present embodiment will be described using Figs. 2A to 2E.

Fig. 2A is a block diagram illustrating the hardware configuration of the client terminal 101.

The client terminal 101 includes a display unit 216, an operation unit 217, the storage unit 214, a control unit 211, and a network communication unit 215.

The storage unit 214 refers to a non-volatile storage device such as a hard disk drive (HDD) or a solid state drive (SSD), which is capable of storing and rewriting digital data.

The control unit 211 includes a central processing unit (CPU) 212 and a memory 213, and controls the overall operation of the client terminal 101. The CPU 212 deploys computer programs stored in the storage unit 214 into the memory 213 and executes them. The memory 213 is the main memory of the CPU 212, and is used as a work area or a temporary storage area for various programs to be deployed.

The network communication unit 215 is a device that communicates with the external network 107, performing the input and output of digital data with external servers, client terminals, etc., via the network 107.

The display unit 216 is a device for displaying visual information to the user in real time, such as a liquid crystal display. The operation unit 217 is a device for accepting the user's inputs entered with a keyboard, a mouse, and the like. It is also permissible to use a device having the functions of both the display unit 216 and the operation unit 217, such as a touchscreen.

Fig. 2B is a block diagram illustrating the hardware configuration of the cloud print server 102. The cloud print server 102 includes a storage unit 224, a control unit 221, and a network communication unit 225.

The storage unit 224, the control unit 221, and the network communication unit 225 are equivalent to those of the client terminal 101, and their description is omitted.

Although the cloud print server 102 is described as being composed of one information processing apparatus having the hardware configuration illustrated in Fig. 2B, the cloud print server 102 may be composed of multiple information processing apparatuses illustrated in Fig. 2B.

Fig. 2C is a block diagram illustrating the hardware configuration of the application management server 103. The application management server 103 includes a display unit 236, an operation unit 237, a storage unit 234, a control unit 231, and a network communication unit 235.

The display unit 236, the operation unit 237, the storage unit 234, the control unit 231, and the network communication unit 235 are equivalent to those of the client terminal 101, and their description is omitted.

Although the application management server 103 is described as being composed of one information processing apparatus having the hardware configuration illustrated in Fig. 2C, the application management server 103 may be composed of multiple information processing apparatuses.

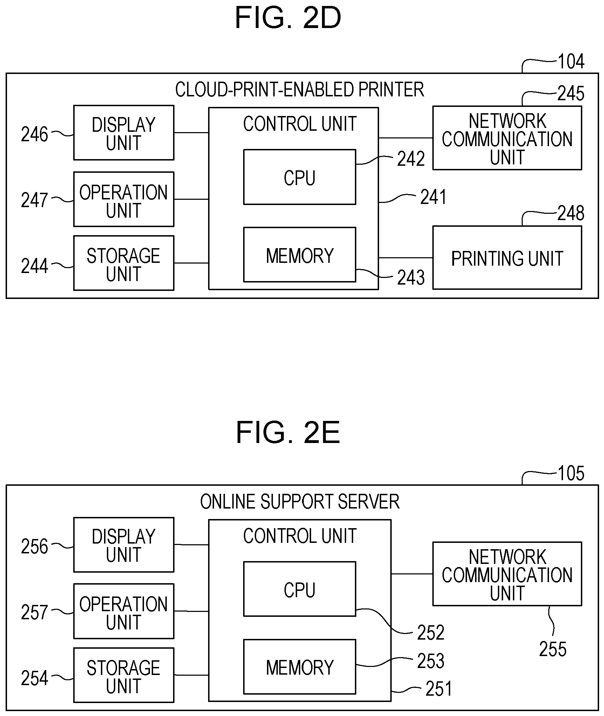

Fig. 2D is a block diagram illustrating the hardware configuration of the cloud-print-enabled printer 104. The cloud-print-enabled printer 104 includes a display unit 246, an operation unit 247, a storage unit 244, a control unit 241, a network communication unit 245, and a printing unit 248.

The display unit 246 is a device for displaying information to the user in real time, including a touchscreen or LEDs that the cloud-print-enabled printer 104 is equipped with.

The operation unit 247 is a device for accepting the user's inputs, which may include hardware keys, such as a numeric keyboard, in addition to a touchscreen. The storage unit 244 and the control unit 241 are equivalent to those of the client terminal 101, and their description is omitted.

The network communication unit 245 is a device that communicates with the external network 107, mainly being responsible for receiving print data and sending information about the status of the cloud-print-enabled printer 104, such as errors, to external servers and the like.

The printing unit 248 is a device configured to perform printing processing by performing a series of operations including feeding, printing, and ejecting sheets prepared in cassettes and trays. The printing method is not specifically limited and can include methods such as electrophotography and inkjet. Finishing devices such as a duplex unit, a stapler, and a punch processor used during paper ejection are also included in the printing unit 248.

Although the present embodiment describes a single-function printer that performs only the printing function as an example of the cloud-print-enabled printer 104 in the present embodiment, a multi-function printer (multi-functional machine) that additionally has the scanner function and the FAX function may also be used.

Fig. 2E is a hardware block diagram illustrating the details of the online support server 105. Although the online support server 105 is described as being composed of one information processing apparatus in the present embodiment, the online support server 105 may be composed of multiple information processing apparatuses. The online support server 105 includes a display unit 256, an operation unit 257, a storage unit 254, a control unit 251, and a network communication unit 255. The display unit 256 and the operation unit 257 are the same as or similar to the display unit 216 and the operation unit 217 of the client terminal 101, and their description is omitted. The storage unit 254 is a memory device such as an HDD, SSD, or the like. The storage unit 254 stores a file containing information for extending the functions provided by the client terminal 101.

The control unit 251 is composed of a CPU 252 and a memory 253. The CPU 252 controls the entire online support server 105. The memory 253 is used for processing executed by the CPU 252. The network communication unit 255 is an interface for the online support server 105 to communicate with the client terminal 101. The online support server 105 receives, via the network communication unit 255, an acquisition request for a file stored in the storage unit 254, and sends the corresponding file to the client terminal 101.

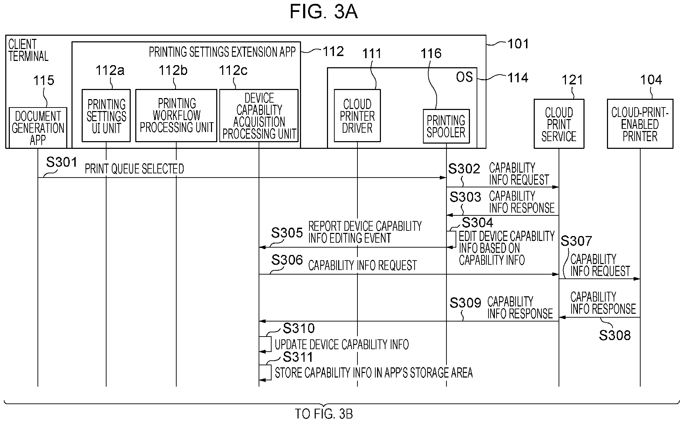

Next, using Figs. 3A to 3C, an example of a procedure for the user to perform printing in the present embodiment, as well as a sequence between each item of software and the printing service will be described.

Note that Figs. 3A to 3C illustrate processing executed after information about the printer 104 is registered with the cloud print service 121 and the generation of a print queue is completed. Here, it is assumed that a print queue is generated for sending print data generated by the cloud printer driver 111 to the printer 104 via the cloud print service 121.

The printing spooler 116 of the OS 114 accepts the user's selecting a print queue via a UI provided by the document generation app 115 (S301). Note that the print queue may be selected even through a printing settings UI provided by the OS 114, which is different from the UI provided by the document generation app 115.

It is described here that the print queue corresponding to the printer 104 has been selected. When the print queue is selected, the printing spooler 116 reads out a Print Ticket.

The Print Ticket is a file indicating the printing settings information describing the current printing settings in XML format, and is managed separately for each print queue. The Print Ticket describes the printing settings in a format that can be interpreted by the OS 114. The printing settings are described in sets of setting items and setting values.

Next, the printing spooler 116 sends the cloud print service 121 an acquisition request for the capability information of the printer 104 corresponding to the selected print queue (S302). In S302, the printing spooler 116 sends an acquisition request for capability information regarding the printing settings items supported by the OS 114 to the cloud print service 121. The printing spooler 116 sends a "Get-Printer-Attributes" command defined in a standard protocol, such as IPP, as an acquisition request for capability information. At this time, by setting attribute information corresponding to each setting item as an argument for the command, the capability information of the setting item specified by the printing spooler 116 can be acquired. Note that, in the present embodiment, attribute information and attribute values are information exchanged according to IPP.

The cloud print service 121 responds to the printing spooler 116 of the OS 114 with the capability information of the printer 104 (S303). In S302 and S303, the capability information is exchanged in the form of attribute information and attribute values defined in IPP. The attribute information is information indicating setting items. The attribute values are values corresponding to the setting values and value ranges of the respective setting items.

The printing spooler 116 of the OS 114 stores the acquired capability information as device capability information associated with the print queue of the printer 104 (S304). The printing spooler 116 converts the acquired attribute information and attribute values into setting items and setting values in a format that the OS 114 can interpret, and stores them as device capability information. If device capability information associated with the print queue has already been stored, the printing spooler 116 adds the capability information acquired in S303 to the stored device capability information.

The printing spooler 116 of the OS 114 notifies the device capability acquisition processing unit 112c of the printing settings extension app 112 of an event indicating that the device capability information can be edited (S305).

The device capability acquisition processing unit 112c can utilize the Application Programming Interface (API) of the OS 114 at a time point at which this event is received. The API is an API for editing the device capability information. At this time point, the printing settings extension app 112 can add to the device capability information attribute information and attribute values corresponding to setting items and setting values that are not supported by the OS 114.

Having received this event, the device capability acquisition processing unit 112c of the printing settings extension app 112 acquires capability information regarding setting items and setting values that are not supported by the OS 114 from the cloud print service 121 and edits the device capability information.

Upon receiving the device capability information editing event from the OS 114, the device capability acquisition processing unit 112c of the printing settings extension app 112 requests the capability information of the printer 104 from the cloud print service 121 (S306). Note that, while the printing settings extension app 112 sends a request to the cloud print service 121 here, it is also acceptable to acquire the capability information using the functionality provided by the OS 114.

The printing settings extension app 112 stores attribute information corresponding to the setting items for which capability information is requested. The device capability acquisition processing unit 112c of the printing settings extension app 112 sends an acquisition request for capability information, excluding attribute information corresponding to setting items for which the capability information has already been acquired by the OS 114, from the attribute information stored by the printing settings extension app 112. This can avoid redundant acquisition requests for capability information for attribute information for which the acquisition of capability information has already been completed. Note that the printing settings extension app 112 may also perform capability information acquisition for attribute information for which the OS 114 has already acquired capability information.

The device capability acquisition processing unit 112c of the printing settings extension app 112 then queries the cloud print service 121 for attribute information selected as a request target using "Get-Printer-Attributes" in a standard protocol such as IPP.

In this way, the printing settings extension app 112 can also obtain capability information for attribute information that is not supported by the OS 114. Note that attribute information not defined in IPP may also be included as a target for which capability information is requested. The printer-vendor-specific attribute information is set as an argument for "Get-Printer-Attributes". In this way, capability information can also be acquired even for attribute information not defined in IPP.

S306 is similar to S302 only in that the attribute information to be queried is different. The printing settings extension app 112 queries the capability information of the vendor-specific setting items by setting attribute information corresponding to the printer-vendor-specific setting items as arguments for commands such as "Get-Printer-Attributes" in a standard protocol such as IPP. Vendor-specific setting items include "staple-free binding", "saddle fold", and "booklet binding".

Arguments corresponding to the individual setting values can be described, for example, as follows.

For example, for "staple-free binding", the custom attribute "ext_stitching" representing "staple-free binding" is specified in the "Get-print-Attributes" protocol.

Additionally, for "saddle fold", the custom attribute "ext_folding" representing "saddle fold" is specified in the "Get-print-Attributes" protocol.

Moreover, for "booklet binding", the custom attribute "ext_booklet_printing" representing "booklet binding" is specified in the "Get-print-Attributes" protocol.

Having received the request for capability information, the cloud print service 121 requests capability information from the printer 104 using IPP (S307). The cloud print service 121 queries the capability information of the printer 104 using "Get-Printer-Attributes". At this time, the cloud print service 121 queries the printer 104 using the arguments reported from the client terminal 101.

The printer 104 responds to the cloud print service 121 with the requested capability information (S308).

The cloud print service 121 responds to the printing settings extension app 112 with the requested capability information (S309). In the present implementation, at a time point at which the printing settings extension app 112 of the client terminal 101 requests the cloud print service 121 to acquire the capability information, the cloud print service 121 acquires the capability information from the printer 104. It is permissible for the printer 104 to register in advance all capability information, whether supported or unsupported by the OS 114, with the cloud print service 121. The cloud print service 121 may then receive an acquisition request for capability information in S306 and send the previously stored capability information to the printing settings extension app 112.

Once the printing settings extension app 112 acquires the vendor-specific capability information from the cloud-print-enabled printer 104, the printing settings extension app 112 edits the device capability information held by the OS 114 through a configuration information object (S310). The processing in S310 adds capability information for printer-vendor-specific setting items not supported by the OS 114 to the device capability information.

A configuration information object is a collection of data necessary for editing device capability information. Since the printing settings extension app 112 is unable to directly edit the device capability information held by the OS 114, this configuration information object is utilized to change the device capability information held by the OS 114.

At this time, the printing settings extension app 112 duplicates and stores the capability information acquired by itself and the capability information acquired by the OS 114 into the app's data storage area as device capability information data of its own (S311).

Next, the printing settings extension app 112 passes the edited configuration information object to the OS 114 (S312). Upon receiving the configuration information object from the printing settings extension app 112, the OS 114 merges the device capability information that the OS 114 itself has with the device capability information added to the configuration information object, and updates it as new device capability information.

Upon generating the new device capability information, the OS 114 enables the print queue, which then makes it possible to activate the printing settings UI unit 112a of the printing settings extension app 112 (S313). Once the print queue is enabled, for example, the OS 114 notifies the document generation app 115 that the print queue is available. In accordance with the receipt of the notification, the document generation app 115 displays a detailed settings button and a print button to be selectable on a printing settings screen being displayed. In addition, if the document generation app 115 is not equipped with the function of displaying a printing settings screen, a detailed settings button and a print button of a modern print dialog, which is a printing settings screen displayed by the OS 114, are displayed to be selectable.

Assume that the user has selected the detailed settings button after the print queue has been enabled. The operation to activate the printing settings UI unit 112a may be operations other than operations on the detailed settings button mentioned above.

The printing spooler 116 of the OS 114 instructs the printing settings UI unit 112a of the printing settings extension app 112 to be activated (S314).

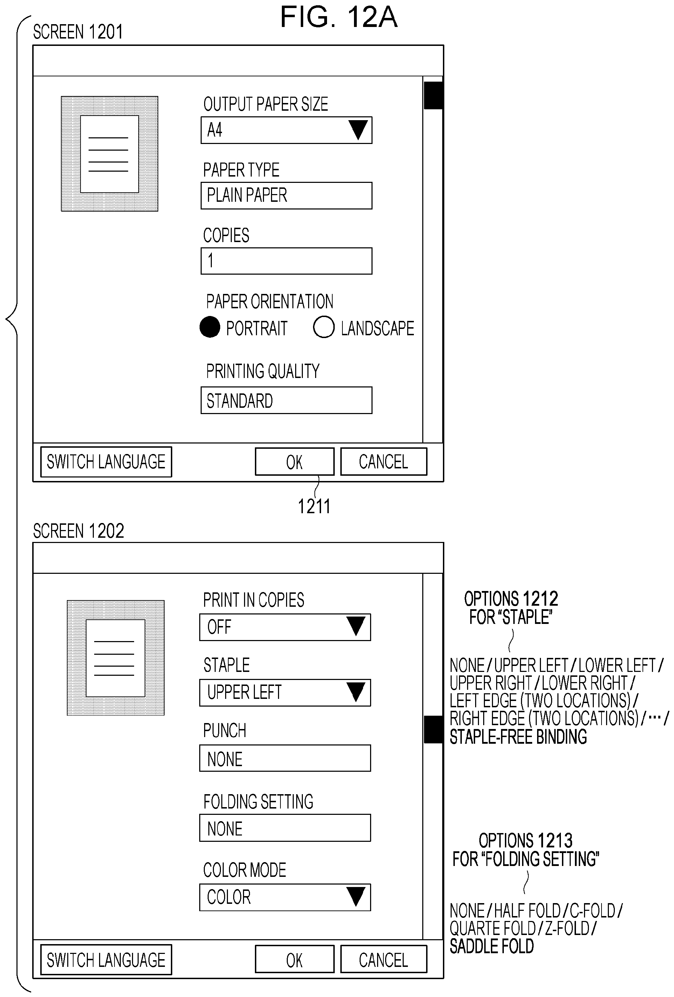

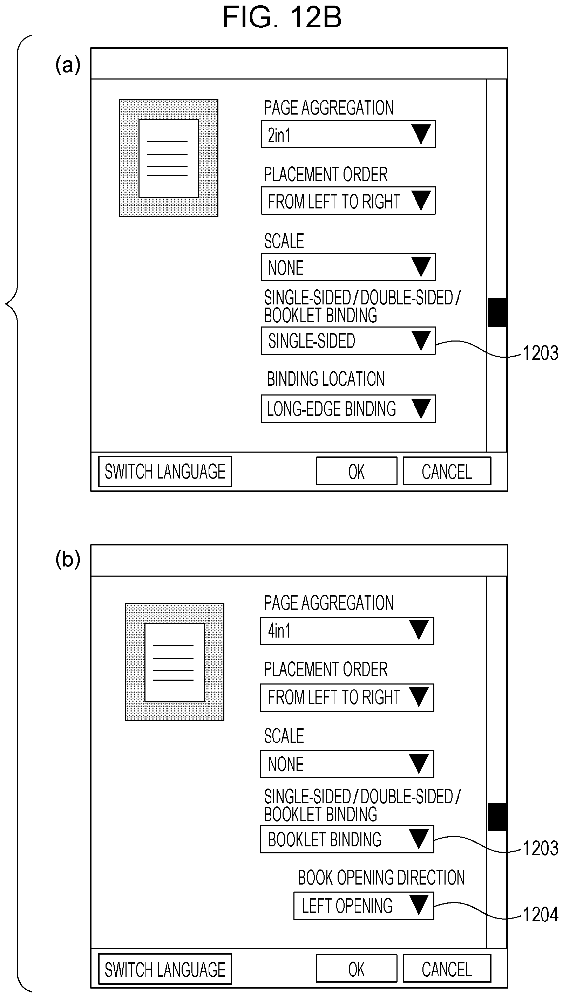

The printing settings extension app 112 receives printing settings capability information (Print Capabilities) generated by the OS 114 from the device capability information and a Print Ticket indicating the current printing settings, and displays a printing settings screen on the display unit 216 (S315). The printing settings UI unit 112a of the printing settings extension app 112 is activated from the OS 114 to display a printing settings screen such as those illustrated in Fig. 12A and parts (a) and (b) of Fig. 12B.

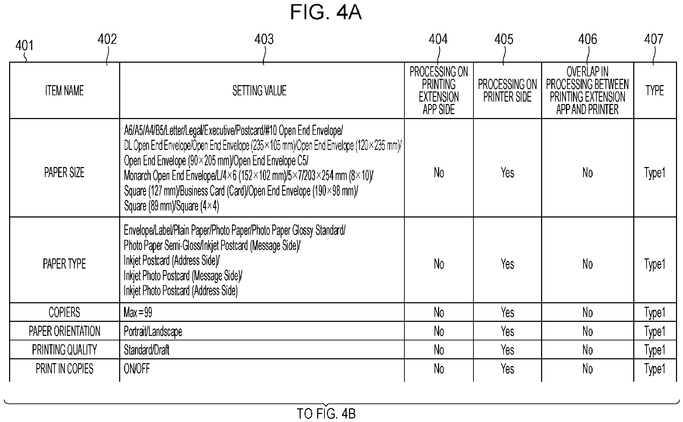

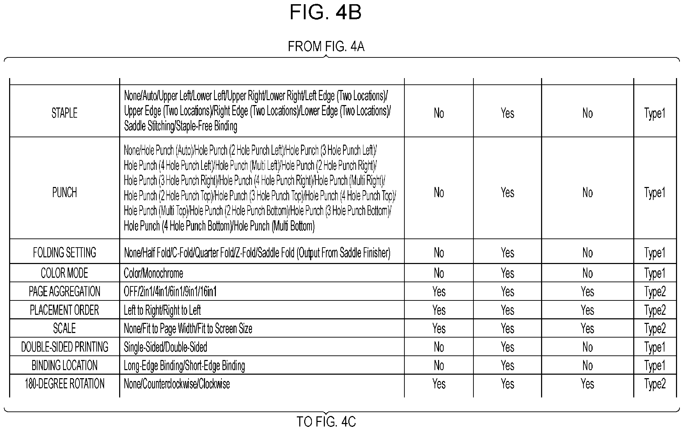

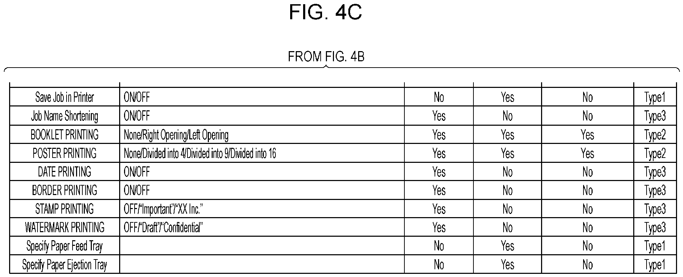

Fig. 12A and parts (a) and (b) of Fig. 12B illustrate examples of graphical user interfaces (GUIs) for printing settings to be displayed by the printing settings UI unit 112a based on the capability information extended by the printing settings extension app 112. A screen 1201 illustrated in Fig. 12A is a printing settings screen provided by the printing settings UI unit 112a when it is activated from the document generation app 115. This screen can be scrolled, and scrolling changes the setting items displayed. On the printing settings screen provided by the printing settings extension app 112, the setting items written in an app function table depicted in Figs. 4A to 4C can be set.

A screen 1202 is provided with an area for setting the setting value of a "staple" function. As options 1212 for the "staple" function, in addition to options such as "none" and "upper left" supported by the OS 114, "staple-free binding" not supported by the OS 114 is a selectable option.

Additionally, the screen 1202 is provided with an area for setting the setting value of a "folding setting" function. As options for the "folding setting" function, in addition to options such as "none", "half fold", and "C-folded" supported by the OS 114, the option "saddle fold" is provided.

Furthermore, part (a) of Fig. 12B illustrates a setting item 1203 for "single-sided/double-sided/booklet binding".

In this setting item, either "single-sided", "double-sided", or "booklet binding" is selectable. "Single-sided" and "double-sided" are setting values supported by the OS 114, whereas "booklet binding" is a setting value not supported by the OS 114. Part (b) of Fig. 12B illustrates a screen displayed when "booklet binding" is selected in the setting item 1203. Here, a setting item 1204, which specifies how the book opens when booklet printing is performed, is displayed. The setting item 1204 allows for setting the opening direction, for example, to "right opening" or "left opening".

Although the addition of options for functions is depicted in the examples illustrated in Fig. 12A and parts (a) and (b) of Fig. 12B, it is also possible to add setting items.

This printing settings screen does not depend on the type of the document generation app 115 to be used, and it is possible to display printing settings information supported by the printing settings extension app 112.

The printing settings UI unit 112a of the printing settings extension app 112 provides a function for changing the printing settings in any way by the user, and stores the changed setting values if the setting values are changed.

For example, assume that the user changes the page aggregation setting from "OFF" to "2-in-1" on the UI. In that case, the printing settings information held by the printing settings extension app 112 changes from "OFF" to "2-in-1".

Then, when the user selects an "OK" button 1211 in Fig. 12A in the printing settings UI unit 112a of the printing settings extension app 112, the printing settings UI unit 112a terminates the display of the printing settings screen. At this time, the printing settings UI unit 112a writes the setting values configured via the UI to the Print Ticket.

After the printing settings UI unit 112a is closed and the printing settings operation is completed, the operation screen for the user returns to a printing settings screen provided by the document generation app 115.

The printing settings UI unit 112a sends the Print Ticket and the UI termination notification to the printing spooler 116 of the OS 114, completing the processing on the printing settings screen of the printing settings extension app 112 (S316).

Next, the document generation app 115 accepts an instruction from the user to start printing via the printing settings screen displayed by the document generation app 115.

The document generation app 115 notifies the cloud printer driver 111 of a printing execution instruction in accordance with the printing start instruction (S317). The cloud printer driver 111 of the OS 114 receives the printing execution instruction from the document generation app 115.

Upon receiving the printing execution instruction, the cloud printer driver 111 converts data received from the document generation app 115 into intermediate image data (S318). The cloud printer driver 111 acquires to-be-printed image data from the document generation app 115. The image data acquired from the document generation app 115 is, for example, image data in Graphics Device Interface (GDI) format. The cloud printer driver 111 converts the acquired image data into intermediate image data. Intermediate image data is data generated before being converted into print data such as PDL, and XPS data corresponds to an example of intermediate image data. Note that, in the case where the document generation app 115 outputs to-be-printed image data as XPS data, the conversion processing corresponding to S318 is not performed.

The cloud printer driver 111 causes the printing spooler 116 to store the generated intermediate image data (S319).

Upon receiving the intermediate image data, the printing spooler 116 of the OS 114 notifies the printing workflow processing unit 112b of the printing settings extension app 112 of a PDL conversion event (S320). A PDL conversion event is an event for notifying that it is possible to execute processing for converting intermediate image data into PDL data that can be processed by a printer.

At this time, the printing workflow processing unit 112b receives, from the printing spooler 116 of the OS 114, the Print Ticket in which the intermediate image data and the current printing settings values are described, along with the notification of the event.

The printing workflow processing unit 112b stores the intermediate image data received in S320 as "original intermediate image data", together with the Print Ticket, in the app's data storage area (S321).

The printing workflow processing unit 112b sends a printing workflow processing request to the printing spooler 116 of the OS 114 (S322).

The printing spooler 116 of the OS 114 receives the printing workflow processing request and, in response to the request content, requests the printing workflow processing unit 112b to activate a preview UI (S323).

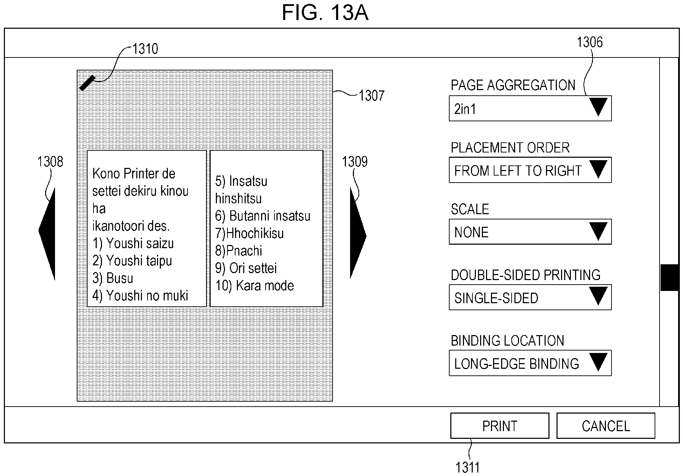

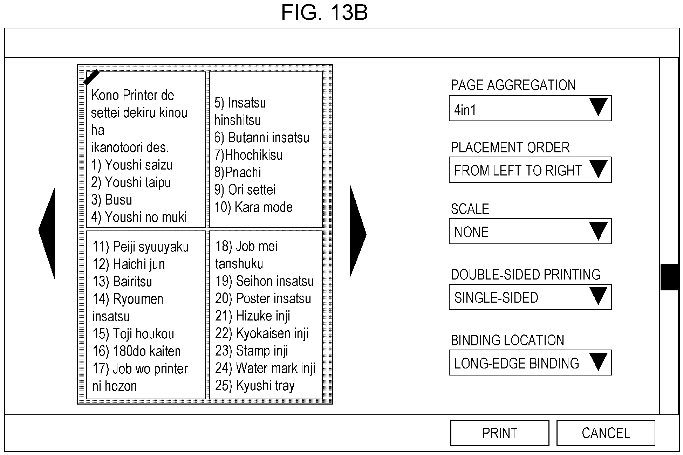

The printing workflow processing unit 112b receives the request to activate a preview UI (Figs. 13A and 13B), displays the preview UI, and starts a printing workflow process (S324). S324 will be described in detail later.

Figs. 13A and 13B each illustrate an example of a preview UI screen provided by the printing workflow processing unit 112b.

Fig. 13A illustrates an example of a preview UI screen displaying a preview image 1307 generated based on the intermediate image data and the Print Ticket, received from the printing spooler 116 of the OS 114. Here, it is reflected in the preview image that the page aggregation setting has been set as 2-in-1 by the printing settings UI unit 112a, and that the staple setting has been set at one location in the upper left corner. An object 1310 indicates the staple position. A button 1308 is a button for displaying a preview image of the previous page.

If the preview image displayed corresponds to the first page, the button 1308 may be hidden or grayed out, preventing any operations. A button 1309 is a button for displaying a preview image of the next page. If the preview image displayed corresponds to the last page, the button 1309 may be hidden or grayed out, preventing any operations. A setting item 1306 is an area for setting the setting value for page aggregation. The value indicated in the Print Ticket is displayed as the initial value.

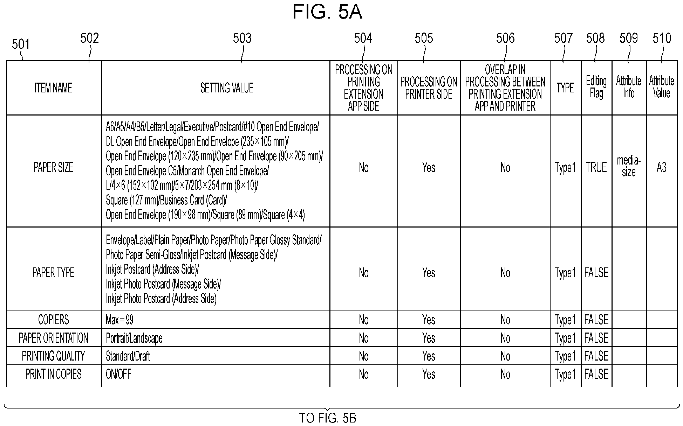

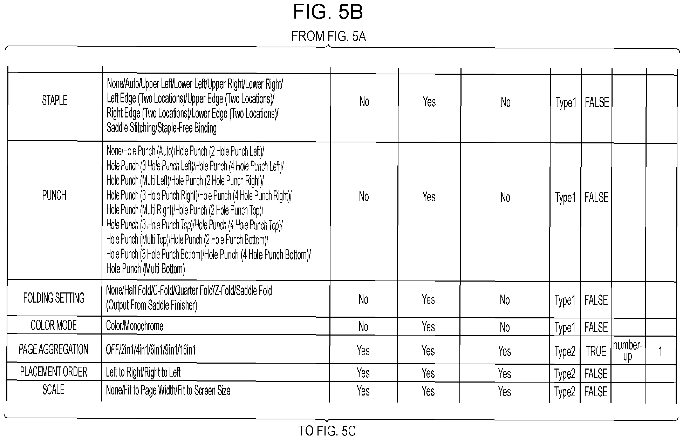

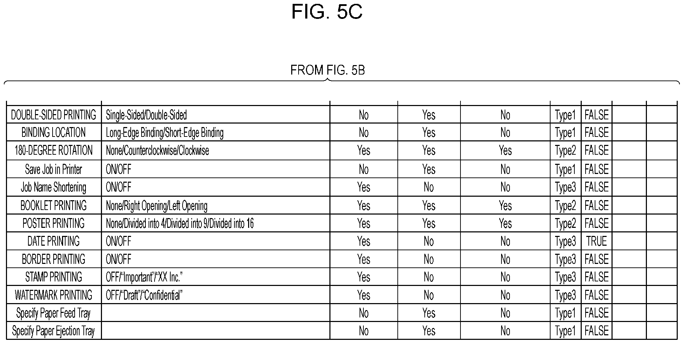

In the present embodiment, the printing settings can be changed after the preview image is displayed. On the preview screen displayed by the printing workflow processing unit 112b, it is possible to change the setting values for any setting items depicted in Figs. 5A to 5C, even for setting items other than those depicted in Figs 13A and 13B.

Fig. 13B illustrates an example of a screen after the printing settings have been edited with the preview UI of the printing workflow processing unit 112b.

Here, assume that the user operates 1306 in Fig. 13A and changes the page aggregation setting from 2-in-1 to 4-in-1. When the setting is changed, the print preview image displayed in the area 1307 is updated.

Whether to include a request for preview UI display in the printing workflow processing request is determined by the printing workflow processing unit 112b.

For example, whether to display a preview on the printing settings screen provided by the printing settings UI unit 112a is set in advance, and the setting value of this setting is written to the Print Ticket. The printing workflow processing unit 112b determines whether preview display is enabled in the Print Ticket provided from the OS 114. If it is determined that preview display is enabled, the printing workflow processing unit 112b sends the printing workflow processing request described in S322 to the printing spooler 116. In contrast, if it is determined that preview display is disabled, the printing workflow processing unit 112b performs the processing in S327, which will be described later. In this way, the user can set whether to display a preview UI.

Alternatively, it may be acceptable for the printing workflow processing unit 112b, upon receiving a PDL conversion event, to unconditionally include a request for preview UI display in the printing workflow processing request for the printing spooler 116 of the OS 114.

When the user selects a "print" button 1311 in the preview UI, the printing workflow processing unit 112b notifies the printing spooler 116 of the OS 114 of the termination of the preview UI (S325). At this time, the printing workflow processing unit 112b stores the setting values set in the preview UI as confirmed printing settings information in the app's storage area.

The printing spooler 116 of the OS 114 requests the printing workflow processing unit 112b to perform a printing workflow termination process (S326).

The printing workflow processing unit 112b determines, as the printing workflow termination process, printing settings information to be reported to the printing spooler 116 (S327). The printing workflow processing unit 112b determines attribute information corresponding to the setting items for which setting values are changed from the Print Ticket, as well as the changed attribute values. S327 is described as a printing settings information determination process. S327 will be described in detail later.

The printing workflow processing unit 112b instructs the OS 114 to generate printing attribute information based on the printing settings information (S328). The printing workflow processing unit 112b notifies the OS 114 of the Print Ticket, the attribute information determined in S327, and the changed attribute values.

In response to the request, the printing spooler 116 of the OS 114 generates printing attribute information (S329). The printing spooler 116 sets, for the attribute information reported in S328, the changed attribute values to the printing attribute information. For setting items other than those corresponding to the attribute information reported in S328, the setting items and setting values described in the Print Ticket are converted into attribute information and attribute values defined in IPP, and are set to the IPP printing settings information. Note that the printer-vendor-specific setting items and setting values are not converted, and are set as they are to the printing attribute information.

The printing spooler 116 of the OS 114 sends the printing attribute information set in S329 to the cloud print service 121 (S330).

The cloud print service 121 sends the printing attribute information received from the client terminal 101 to the printer 104 (S331). The printer 104 notifies the cloud print service 121 that receipt of the printing attribute information has been completed. The cloud print service 121 notifies the printing spooler 116 of the notification received from the printer 104.

The printing spooler 116 of the OS 114 notifies the printing workflow processing unit 112b that receipt of the printing attribute information has been completed (S332).

Next, the printing workflow processing unit 112b generates intermediate image data for printing, which is to be sent to the cloud print service 121 (S333). The printing workflow processing unit 112b reads out the stored original intermediate image data and the confirmed printing settings information from the app's data storage area. The printing workflow processing unit 112b performs editing processing on the original intermediate image data to generate intermediate image data for printing.

For example, if the page aggregation setting has been changed from "2-in-1" to "4-in-1" in the preview UI (setting item 1306 in Figs. 13A and 13B), the setting "4-in-1" remains in the confirmed printing settings information. The printing workflow processing unit 112b loads that confirmed printing settings information and generates intermediate image data for printing, laying out image data for four pages onto a single page.

The printing workflow processing unit 112b converts the edited intermediate image data for printing into PDL data (S334). In S334, the printing workflow processing unit 112b generates PDL data, which is in a format that can be interpreted by the printer 104. In the present embodiment, for example, PDF or PWG-Raster data is generated as PDL data. Note that the printing workflow processing unit 112b may utilize the functionality provided by the OS 114 to generate PDL data.

The printing workflow processing unit 112b passes the generated PDL data to the printing spooler 116 of the OS 114 (S335).

The printing spooler 116 of the OS 114 generates print data based on the PDL data passed from the printing workflow processing unit 112b (S336).

The printing spooler 116 of the OS 114 sends the generated print data to the cloud print service 121 via the print queue (S337).

The cloud print service 121 sends the print data passed from the printing spooler 116 of the OS 114 to the cloud-print-enabled printer 104 (S338).

While this flow has been described using cloud printing as an example, it is equally applicable to local printing where the client terminal communicates directly with the printer without going through a cloud print service.

The above is a description of the flow of a series of actions from the document generation app 115 displaying a printing settings screen to sending print data to the printer 104.

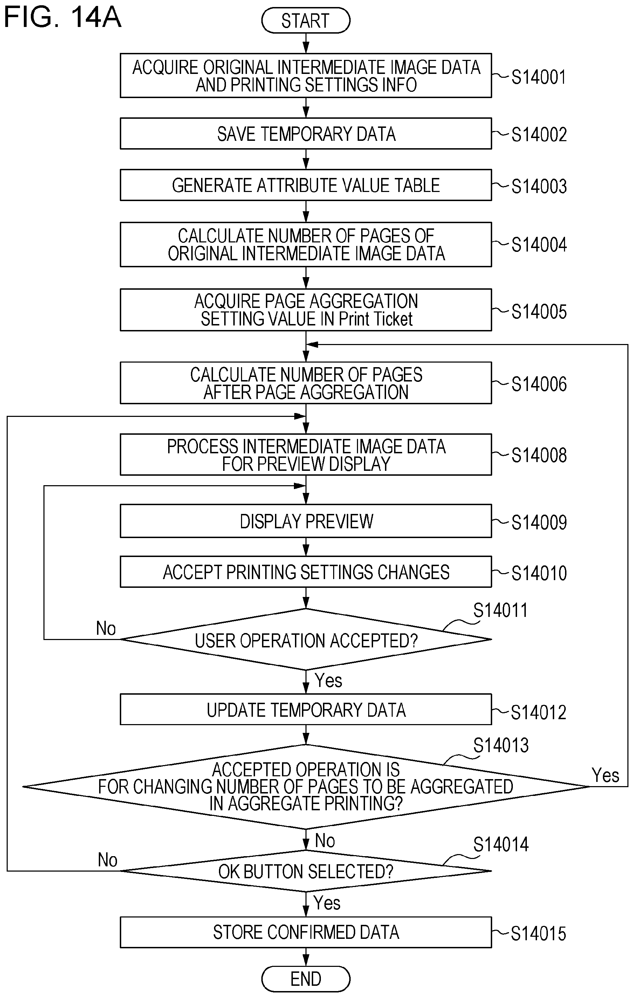

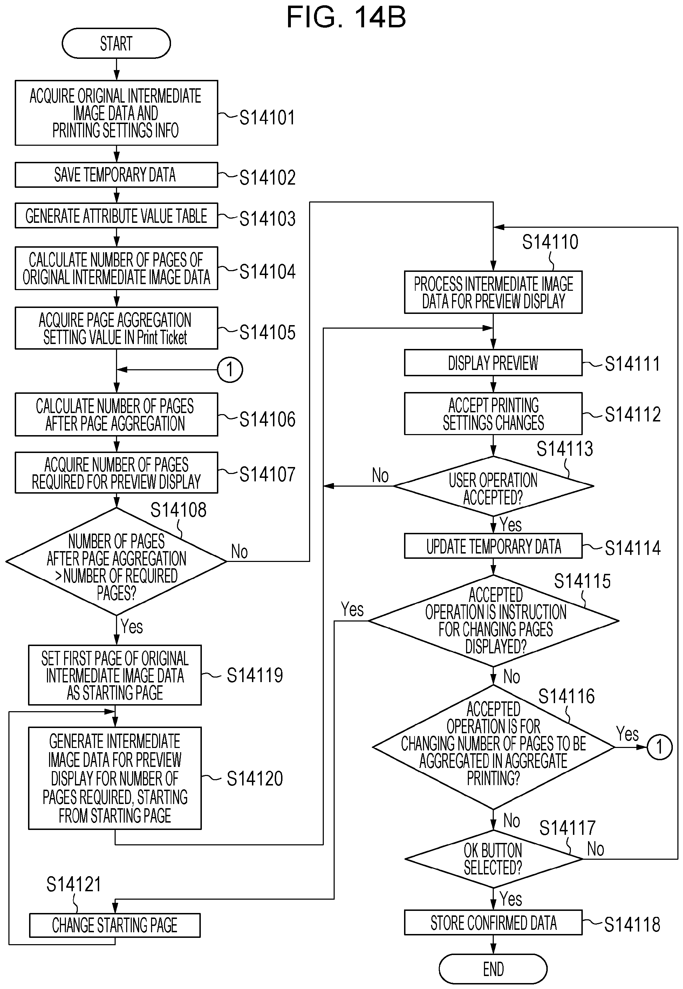

Next, the printing workflow process (S324) will be described in detail using Figs. 13A, 13B, 14A, and 14B. Fig. 14B illustrates an alternative process to that illustrated in Fig. 14A, and it is only necessary that either process, depicted in Fig. 14A or Fig. 14B, be executed.

Fig. 14A is a flowchart illustrating the process from the printing workflow processing unit 112b generating a preview image to be displayed on the preview display UI to accepting a print instruction to complete the process.

A program for executing the flowchart is stored in the storage unit 214 of the client terminal 101 and executed by the CPU 212.

In the description of Fig. 14A, the process executed by the printing workflow processing unit 112b is described using, for example, the case where the original intermediate image data has 100 pages and the setting 2-in-1 is recorded in the Print Ticket.

First, the printing workflow processing unit 112b reads out the original intermediate image data and the Print Ticket stored in S321 (S14001).

Next, the printing workflow processing unit 112b temporarily stores the original intermediate image data and the printing settings information extracted from the Print Ticket in the app's data storage area as temporary printing settings information (S14002).

The printing workflow processing unit 112b generates an attribute value table based on the information about the setting items stored in the program of the printing settings extension app 112 (S14003).

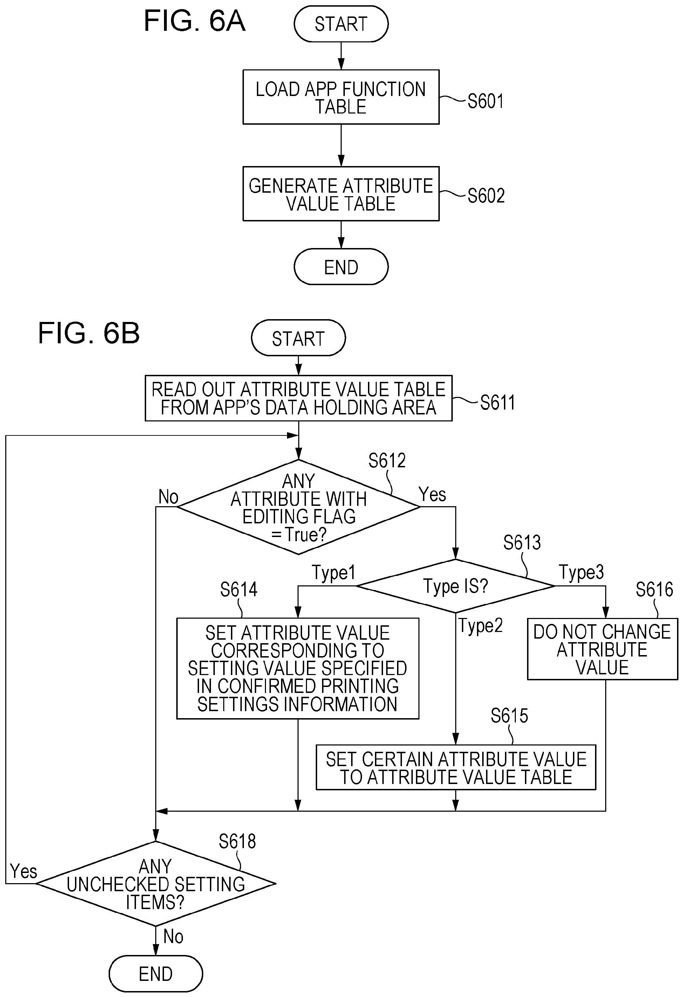

The processing in S14003 will now be described in detail using Fig. 6A. The process illustrated in Fig. 6A is realized by the CPU 212 executing a program of the printing settings extension app 112.

The printing workflow processing unit 112b reads out an app function table 401 from the app's data storage area (S601). Figs. 4A to 4C are diagrams illustrating an example of the app function table 401. The app function table 401 describes information about functions that can be set using the printing settings extension app 112. An "Item Name" field 402 indicates the name of each setting item. A "Processing on Printing Settings App Side" field 404 indicates, when a function of interest is enabled, whether processing corresponding to this function can be performed by the printing settings extension app 112. For example, if the page aggregation setting is enabled, the printing settings extension app 112 performs the process of laying out multiple pages of intermediate image data acquired from the printing spooler 116 onto a single page. Additionally, the "Processing on Printing Settings App Side" field 404 is set to "YES" for functions such as the printing settings extension app 112 editing intermediate image data. A "Processing on Printer Side" field 405 indicates, when a function of interest is enabled, setting items that can be processed by the printer 104.

For example, stapling is a setting item that can be processed by the printer 104 according to the received printing settings information, even without processing by the printing settings extension app 112. As mentioned here, the "Processing on Printer Side" field 405 is set to "YES" for setting items that can be processed even without the printing settings extension app 112. An "Overlap in Processing Between Printing Settings Extension App and Printer" field 406 indicates whether one function can be processed by both the printing settings extension app 112 and the printer 104. The "Overlap in Processing Between Printing Settings Extension App and Printer" field 406 is marked as "YES" when both the fields 404 and 405 are set to "YES". For example, regarding page aggregation, the process of laying out images of multiple pages onto a single page is a process that can be handled by both the printing settings extension app 112 and the printer 104, so the field 406 is marked as "YES".

A "Type" field 407 is a type set according to the settings in the fields 404 to 406. If the field 404 is marked as "NO" and the field 405 as "YES", Type 1 is set. If the field 404 is marked as "YES" and the field 405 as "YES", Type 2 is set. If the field 404 is marked as "YES" and the field 405 as "NO", Type 3 is set. The above is a description of the app function table 401.

Next, the printing workflow processing unit 112b generates an attribute value table 501 based on the read-out app function table 401 (S602). The attribute value table 501 is a table generated for each print job. Fields 502 to 507 in the attribute value table 501 are the same as the fields 402 to 407 in the app function table 401, and their description is omitted. An "Editing Flag" field 508 corresponds to a flag indicating that the printing settings extension app 112 has edited the intermediate image data or changed the printing settings after the preview UI is displayed. The initial value is FALSE, and, when the original intermediate image data is edited or the setting values are changed while the preview UI is being displayed, TRUE is set. An "Attribute Information" field 509 corresponds to attribute information defined in IPP for each setting item. Note that, for setting items not defined in IPP, attribute information defined by the printer vendor is described. An "Attribute Value" field 510 describes information about attribute values defined in IPP, which the printing workflow processing unit 112b reports to the printing spooler 116. The initial values for the "Attribute Information" field 509 and the "Attribute Value" field 510 are null, and the attribute information and attribute values are set according to the process described below. The above is a description of the process related to generating the attribute value table 501.

The description now returns to Fig. 14A. The printing workflow processing unit 112b analyzes the original intermediate image data and calculates the number of pages of the original intermediate image data (S14004). Here, 100 pages is stored as the number of pages of the original intermediate data in the app's data storage area.

Next, the printing workflow processing unit 112b acquires the setting value for page aggregation from the Print Ticket (S14005). Since 2-in-1 is set in the Print Ticket, "2" is stored as the number of pages to be aggregated in the app's data storage area.

Next, the printing workflow processing unit 112b calculates the number of pages after page aggregation (S14006). The number of pages is acquired by dividing the number of pages of the original intermediate image data by the number of pages to be aggregated. Here, the value "50" is stored as the number of pages after page aggregation in the app's storage area. Note that the number of pages after the aggregation is to be rounded up to the decimal point.

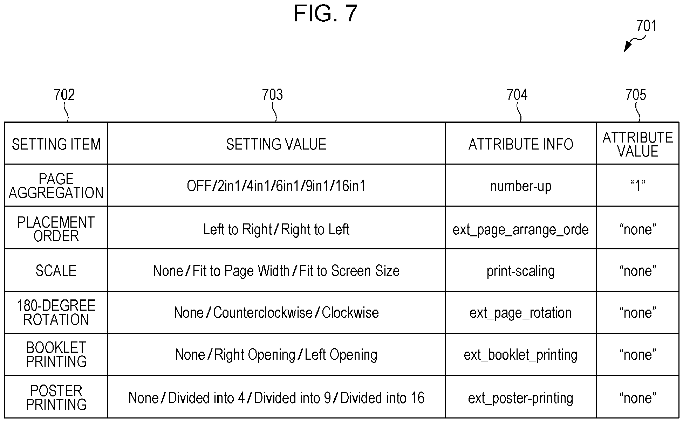

Next, the printing workflow processing unit 112b processes the intermediate image data for preview display (S14008). The printing workflow processing unit 112b edits the original intermediate image data acquired in S14001 to generate intermediate image data for preview display. In this example, since the page aggregation setting value acquired in S14005 is "2", the printing workflow processing unit 112b generates intermediate image data for preview display, laying out data for two pages in the original intermediate image data onto a single page. Note that, in S14008, the printing workflow processing unit 112b sets the "Editing Flag" field 508 in the attribute value table 501. Of the settings included in the temporary printing settings information, the printing workflow processing unit 112b performs the following process for the setting items where the "Type" field 507 in the attribute value table 501 is "Type 2". The printing workflow processing unit 112b determines whether the setting value of each setting item matches an "Attribute Value" field 705 in a table 701 depicted in Fig. 7. Fig. 7 illustrates a table for correcting printing attribute information generated by the printing spooler 116 in S329. If the values match, the printing workflow processing unit 112b terminates the process. If there is a discrepancy, the printing workflow processing unit 112b sets TRUE to the "Editing Flag" field 508 for the corresponding setting item in the attribute value table 501. For example, if the page aggregation is set to 2-in-1, the Editing Flag corresponding to the page aggregation in the attribute value table is set to TRUE. In doing so, it can be recorded in the attribute value table 501 that the printing settings extension app 112 has edited the original intermediate image data.

Next, the printing workflow processing unit 112b causes the edited and processed intermediate image data to be displayed on the preview UI (Figs. 13A and 13B) (S14009).

The printing workflow processing unit 112b then accepts changes to the printing settings via the preview UI (S14010). The printing settings accepted in the preview UI (Figs. 13A and 13B) may not be identical to the printing settings that can be specified using the first printing settings UI (Fig. 12A and parts (a) and (b) of Fig. 12B). For example, the setting items whose default values are marked as "auto", such as "paper feed tray" and "paper ejection tray", may be omitted from display in the preview UI (Figs. 13A and 13B).

Next, the printing workflow processing unit 112b determines whether a user operation has been accepted (S14011). Until a user operation is accepted, the printing workflow processing unit 112b continues preview display (S14009) and acceptance of printing settings changes (S14010).

If a user operation is accepted, the printing workflow processing unit 112b updates the temporary printing settings information stored in the app's data storage area (S14012). At this time, the printing workflow processing unit 112b sets the "Editing Flag" 508 to TRUE for items whose settings in the attribute value table 501 have been changed. If the "Editing Flag" 508 has already been set to TRUE, the printing workflow processing unit 112b does not change the flag.

Next, the printing workflow processing unit 112b determines whether the operation accepted from the user is for setting the number of pages to be aggregated (S14013).

If it is determined in S14013 that the operation accepted from the user is for setting the number of pages to be aggregated, the printing workflow processing unit 112b returns the process to S14006. Using the changed number of pages to be aggregated, the printing workflow processing unit 112b recalculates the number of pages to be aggregated, and executes the processing from S14008 onwards.

If it is determined in S14013 that the operation accepted from the user is not for setting the number of pages to be aggregated, the printing workflow processing unit 112b determines whether the operation accepted from the user is for selecting the OK button (S14014).

If it is determined in S14014 that the accepted user operation is not for selecting the OK button, the printing workflow processing unit 112b returns the process to S14008. Thereafter, a preview image is generated and displayed in accordance with a user operation.

If it is determined in S14014 that the accepted user operation is for selecting the OK button, the printing workflow processing unit 112b terminates preview display and acceptance of printing settings changes, and executes the following process.

The printing workflow processing unit 112b stores the original intermediate image data and the temporary printing settings information as confirmed printing settings information in the app's data storage area (S14015). S14015 is described as a confirmed data storage process.

Next, the process illustrated in Fig. 14B will be described. As mentioned earlier, Fig. 14B illustrates an alternative process to that illustrated in Fig. 14A. In Fig. 14A, preview images are generated for all pages of the original intermediate image data, and then the preview images are displayed. However, if the number of pages of the original intermediate image data is large, it will take time to generate preview images for all the pages. Therefore, in Fig. 14B, the number of pages of preview images to be generated is set to a certain number of pages, and if there is an instruction from the user to switch the page displayed, preview images are generated as many as necessary.

Note that the processing from steps S14101 to S14106 is equivalent to the processing from S14001 to S14006, and their description is omitted.

The printing workflow processing unit 112b acquires the number of pages of preview images to be generated from the app's data storage area (S14107). The number of pages of preview images prepared for preview display is predetermined by the printing workflow processing unit 112b, and this number of pages is stored in the app's data storage area. Here is an example of storing a value of five pages as the number of pages required for preview display. Note that, as another method of acquiring the number of pages required for preview display, the number may be set using other UIs of the printing settings extension app 112 (such as the UI of the printing settings UI unit 112a or an application preferences UI (not illustrated)).

The printing workflow processing unit 112b determines whether the number of pages after page aggregation, which is calculated in S14106, is greater than the number of pages required for preview display, which is stored in the app's data storage area (S14108).

If the number of pages after page aggregation is less than or equal to the number of pages required for preview display, the printing workflow processing unit 112b generates intermediate image data for preview display in the amount of all the pages at once.

The processing from steps S14110 to S14114 is equivalent to the processing from S14008 to S14012, and their description is omitted.

If it is determined that the number of pages after page aggregation is greater than the number of pages required for preview display, the printing workflow processing unit 112b executes the processing described in S14119.

The printing workflow processing unit 112b sets the first page of the original intermediate image data as the starting page (S14119). For example, the first page is set as the starting page.

Next, the printing workflow processing unit 112b generates intermediate image data for previewing the required number of pages starting from the starting page (S14120). Here, since the required number of pages is five pages and the page aggregation setting value is "2", intermediate image data for ten pages, starting from the starting page of the original intermediate image data, is processed into 2-in-1 to generate intermediate image data for preview display.

Next, the printing workflow processing unit 112b causes the edited and processed intermediate image data to be displayed on the preview UI (Figs. 13A and 13B) (S14111). The printing workflow processing unit 112b then accepts changes to the printing settings via the preview UI (Figs. 13A and 13B) (S14112).

Next, the printing workflow processing unit 112b accepts a user operation (S14113).

The printing workflow processing unit 112b continues preview display (S141 11) and acceptance of printing settings changes (S14112) until a user operation is accepted.

If a user operation is accepted, the printing workflow processing unit 112b updates the temporary printing settings information stored in the app's data storage area as having determined that there has been a change to the printing settings (S14114).

Next, the printing workflow processing unit 112b determines whether the operation accepted from the user is an instruction for changing the page displayed (S14115). If the button 1308 or the button 1309 illustrated in Fig. 13A is selected, the printing workflow processing unit 112b advances the process to S14121 as having accepted the process of changing the page displayed. Otherwise, the printing workflow processing unit 112b advances the process to S14116.

If it is determined in S14115 that the operation accepted from the user is an instruction for changing the page displayed, the printing workflow processing unit 112b changes the starting page (S14121). For example, if it is instructed to display the next page while displaying the preview image of the first page laid out in 2-in-1, the third page of the original intermediate image data is set as the starting page.

The printing workflow processing unit 112b then generates intermediate image data for previewing the required number of pages starting from the starting page (S14120). Here, intermediate image data for preview display of ten pages, starting from the third page of the original intermediate image data, is generated. Note that the generation process may be skipped for pages for which the generation of intermediate image data for display has already been completed.

If it is determined in S14115 that the operation accepted from the user is not an instruction for changing the page displayed, the printing workflow processing unit 112b determines whether the operation accepted from the user is the aggregate number for aggregate printing (S14116).

If it is determined in S14116 that the operation accepted from the user is the aggregate number for aggregate printing, the process returns to step S14106, where the number pf pages after page aggregation is recalculated using the changed aggregate number for aggregate printing, and the process continues from S14107 onwards.

If it is determined in S14116 that the operation accepted from the user is not the aggregate number for aggregate printing, it is determined whether the operation accepted from the user is selecting the OK button (S14117). If the user operation is not selecting the OK button, the printing workflow processing unit 112b returns the process to S14110. In S14110, the printing workflow processing unit 112b changes the preview image displayed in response to the accepted change to the printing settings. For example, if the staple position is changed, the object 1310 indicating the staple position of the preview image is changed. Additionally, if punching or folding is set, the preview display is changed so that the punching position or folding position becomes visible.

If the OK button is selected in S14117, the printing workflow processing unit 112b terminates preview display and acceptance of printing settings changes. The printing workflow processing unit 112b then stores the original intermediate image and temporary printing settings information as confirmed printing settings information in the app's data storage area (S14118). Here, S14118 is described as a confirmed data storage process.

Next, the printing settings determination process (S327) will be described in detail using Fig. 6B.

The process illustrated in Fig. 6B is realized by the CPU 212 executing a program of the printing settings extension app 112.

In the printing settings determination process, the printing settings extension app 112 determines setting information to be reported to the printing spooler 116. An example will be described in which the Print Ticket reported from the printing spooler 116 specifies "Paper Size: A4, Page Aggregation: 2-in-1, Date Printing: OFF", and the settings are changed to "Paper Size: A3, Page Aggregation: 4-in-1, Date Printing: ON" using the preview UI.

The printing workflow processing unit 112b reads out the attribute value table 501 from the app's data storage area (S611). For the setting items in the attribute value table 501, the processing described in S612 to S616 is executed.

The printing workflow processing unit 112b determines whether the "Editing Flag" field 508 for each setting item recorded in the attribute value table 501 is "TRUE" (S612). If the "Editing Flag" field 508 is "FALSE", the printing workflow processing unit 112b executes the processing described later in S618. If the "Editing Flag" field 508 is "TRUE", the printing workflow processing unit 112b executes the processing described in S613.

The printing workflow processing unit 112b determines the "Type" field 507 of the setting item for which the "Editing Flag" field 508 is set to "TRUE" (S613). In the case of Type 1, the printing workflow processing unit 112b executes the processing described in S614. The printing workflow processing unit 112b sets the attribute information corresponding to this setting item and the attribute value indicated in the confirmed printing settings information to the attribute value table 501 (S614). For example, in the previous example, "Paper Size" corresponds to a Type 1 setting item. Therefore, the printing workflow processing unit 112b sets the "Editing Flag" field 508 corresponding to "Paper Size" in the attribute value table 501 to "TRUE". Then, the printing workflow processing unit 112b sets "media-size" to the "Attribute Information" field 509 of "Paper Size", and sets "A3" to the "Attribute Value" field 510.

If it is determined in S613 that the "Type" field 507 of the setting item for which the "Editing Flag" field 508 is set to "TRUE" is Type 2, the printing workflow processing unit 112b executes the processing described in S615. The printing workflow processing unit 112b refers to the table 701 depicted in Fig. 7, and sets an "Attribute Information" field 704 and an "Attribute Value" field 705 corresponding to this setting item to the "Attribute Information" field 509 and the "Attribute Value" field 510 in the attribute value table 501 (S615). The table 701 depicted in Fig. 7 is a table indicating attribute values for suppressing the printer 104 from performing the same processing as the processing executed by the printing settings extension app 112. An "Item Name" field 702 is the item name of an item set as Type 2 in the "Type" field 407 of the app function table 401. A "Setting Value" field 703 indicates a setting value that can be set for each setting item. The "Attribute Information" field 704 is attribute information corresponding to each setting item. The "Attribute Value" field 705 is an attribute value for controlling the printer 104 not to perform additional processing.

Type 2 setting items include, for example, the following.

In the case of the setting item "Placement Order", it indicates that the IPP attribute is "next_page_arrange_order", and the attribute value specified to the printer is "None".

In the case of the setting item "Scale", it indicates that the IPP attribute is "print-scaling", and the attribute value specified to the printer is "None".

In the case of the setting item "180-Degree Rotation", it indicates that the IPP attribute is "ext_page_rotation", and the attribute value specified to the printer is "None".

In the case of the setting item "Booklet Printing", it indicates that the IPP attribute is "ext_booklet_printing", and the attribute value specified to the printer is "None".

In the case of the setting item "Poster Printing", it indicates that the IPP attribute is "ext_poster_printing", and the attribute value specified to the printer is "None".

For example, in the previous example, "Page Aggregation" corresponds to a Type 2 setting item. The printing workflow processing unit 112b sets "number-up" to the "Attribute Information" field 509 corresponding to "Page Aggregation" in the attribute value table 501, and sets "1" to the "Attribute Value" field 510.

In S615, for setting items to be processed by the printing settings extension app 112, the printing workflow processing unit 112b sets an attribute value such that the printer will not perform additional processing as a setting value to be reported to the printer. This makes it possible to suppress any overlap of the same processing to be performed by the printing settings extension app 112 and the printer 104.

If it is determined in S613 that the "Type" field 507 of the setting item for which the Editing Flag 508 is set to "TRUE" is Type 3, the printing workflow processing unit 112b determines not to change the attribute value (S616). In the previous example, "Date Printing" corresponds to a Type 3 setting item. Since the attribute value table is not updated for Type 3, the printing workflow processing unit 112b proceeds with the processing as it is. Note that, for Type 3, the printing workflow processing unit 112b may skip the processing in S616 and perform the processing in S618.

The printing workflow processing unit 112b determines whether there are any unchecked setting items remaining (S618). If there are unchecked setting items remaining, the printing workflow processing unit 112b returns the process to S612. In contrast, if the check is completed, the printing workflow processing unit 112b terminates the process illustrated in Fig. 6B.

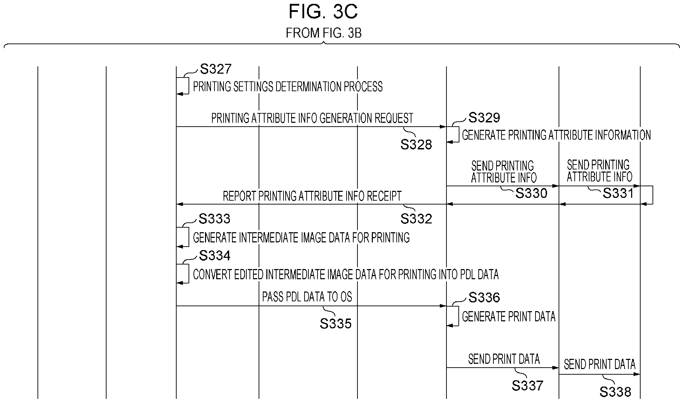

In the printing settings information generation request illustrated in Fig. 3C, the printing workflow processing unit 112b notifies the printing spooler 116 of the Print Ticket, as well as the "Attribute Information" field 509 and the "Attribute Value" field 510 of the setting item(s) where the "Editing Flag" field 508 in the attribute value table 501 is set to "TRUE".

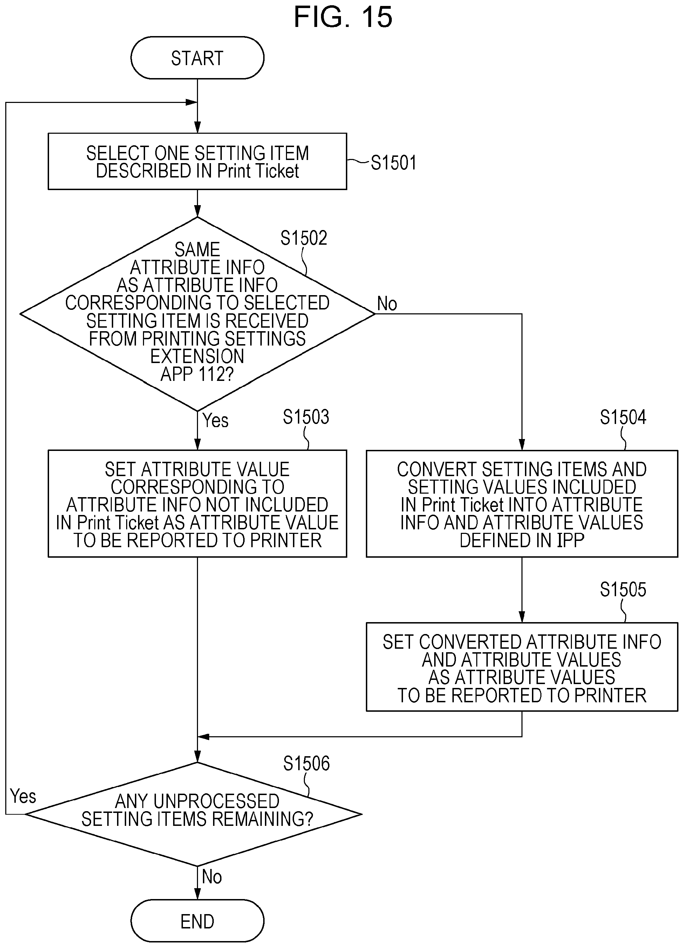

The processing executed in S329 by the printing spooler 116 will now be described using Fig. 15.

The process illustrated in Fig. 15 is realized by the CPU 212 executing a program provided by the OS 114.

The printing spooler 116 selects one setting item from the Print Ticket reported from the printing settings extension app 112 (S1501).

The printing spooler 116 determines whether the same attribute information as the attribute information corresponding to the selected setting item has been received from the printing settings extension app 112 (S1502). For example, assume that the printing spooler 116 selects "Page Aggregation" in S1501. The printing spooler 116 determines whether the attribute information "number-up", which is the attribute information corresponding to "Page Aggregation", has been reported from the printing settings extension app 112. The printing spooler 116 has received "1" as the attribute value of "number-up". Accordingly, the printing spooler 116 sets "number-up: 1" as the attribute value to be reported to the printer, rather than "number-up: 2", which is the attribute value corresponding to 2-in-1 set in the Print Ticket.

The printing spooler 116 determines whether there are any unprocessed setting items remaining in the Print Ticket (S1506). If there are unprocessed setting items remaining, the printing spooler 116 returns the process to S1501.

If it is determined in S1502 that the same attribute information as the attribute information corresponding to the selected setting item has not been received from the printing settings extension app 112, the printing spooler 116 advances the process to S1504.

The printing spooler 116 converts the setting items and setting values described in the Print Ticket into IPP-defined attribute information and attribute values (S1504). Note that, in the case where the setting items and setting values described in the Print Ticket are attribute information and attribute values that are not defined in IPP, the printing spooler 116 advances the process to S1505 without converting the setting items and setting values.

The printing spooler 116 sets the converted attribute information and attribute values as attribute information and attribute values to be reported to the printer (S1505). Note that, if no conversion is performed in S1504, the setting items and setting values described in the Print Ticket are set as attribute information and attribute values to be reported to the printer.

After completing the process illustrated in Fig. 15, the printing spooler 116 sends the attribute information and attribute values, which are to be reported to the set printer, to the cloud print service 121 (S330).

In this way, for the setting items set with Type 1 in the attribute value table 501, attribute values corresponding to the setting values after being changed using the preview UI are reported to the printer. For the setting items set with Type 2, attribute values allowing the printing settings extension app 112 to perform the corresponding processing and preventing the printer from performing additional processing are reported to the printer. Since Type 3 corresponds to the setting items that are only referenced by the printing settings extension app 112, attribute values corresponding to the setting values that have not been changed from the Print Ticket are reported to the printer.

Thus, in the present embodiment, the printing settings extension app 112 notifies the OS 114 of attribute information and attribute values corresponding to the settings set using the preview display UI, in addition to the Print Ticket. This makes it possible to notify the printer of the setting values set using the preview display UI. In addition, setting items that can be processed by both the printing settings extension app 112 and the printer 104 are set by the printing settings extension app 112, and the printer 104 is notified of values different from those set on the printing settings screen or the preview display UI. This makes it possible to suppress any overlap of the same processing to be performed by both the printing settings extension app 112 and the printer 104.

### Second Embodiment

The first embodiment has described an example of changing attribute values using the API of the OS for printing settings items where editing and processing of intermediate image data has occurred during preview display, or printing settings items where changes have occurred during preview.

A second embodiment will now describe an example in which the printing settings extension app 112 changes attribute values without using the API.

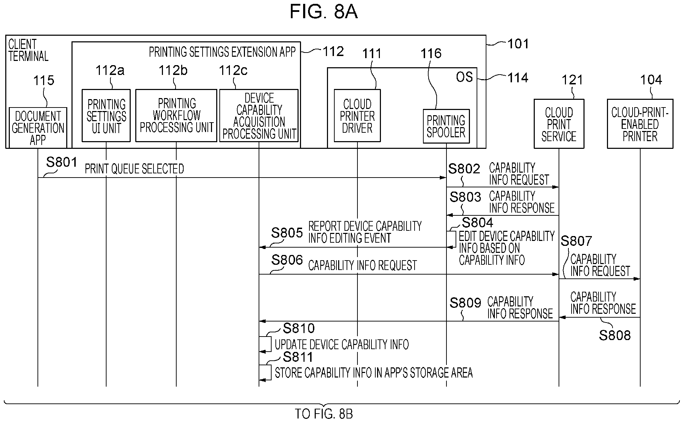

Specific processing according to the present embodiment will be described using Figs. 8A to 8C. Note that only differences from the first embodiment will be described here. The system configuration and hardware configuration are the same as those in the first embodiment with some exceptions, and their description is omitted.

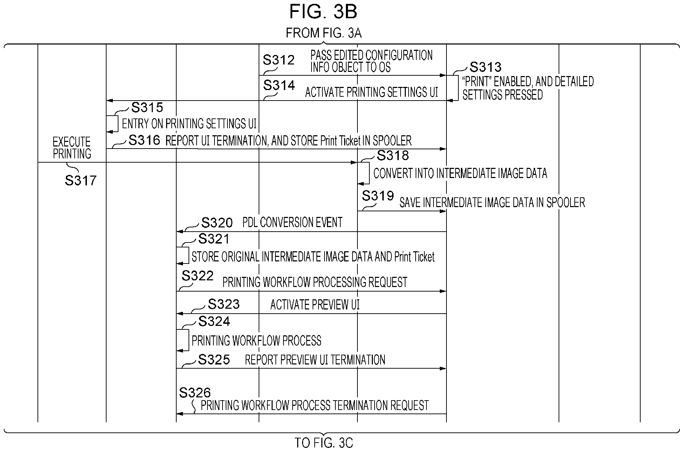

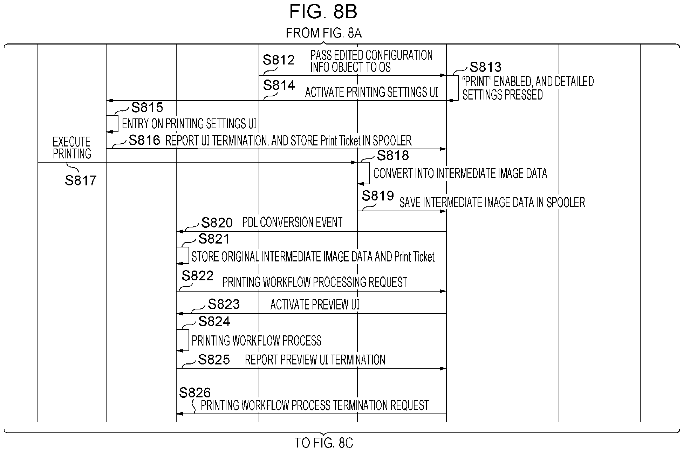

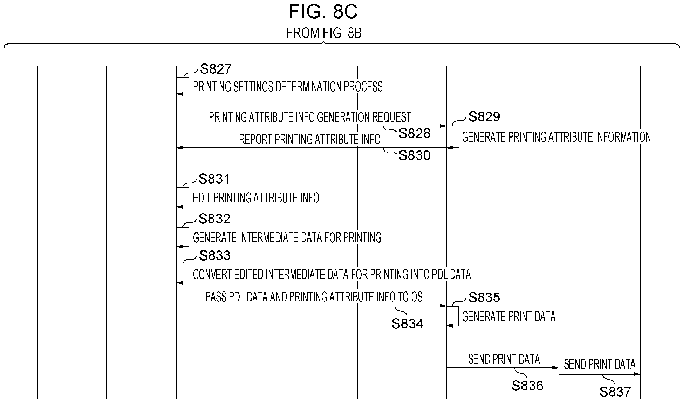

S801 to S827 in Figs. 8A, 8B, and 8C are equivalent to the processing from S301 to S327 in FIG. 3, and their description is omitted.

The printing workflow processing unit 112b sends a printing attribute information generation request to the printing spooler 116 (S828). The printing workflow processing unit 112b sends a Print Ticket and a request for conversion into printing attribute information.

The printing spooler 116 converts the printing settings and setting values written in the received Print Ticket into IPP-defined attribute information and attribute values. Note that, for items not defined in IPP, the setting items and setting values reported from the printing workflow processing unit 112b are set as attribute information and attribute values.

The printing spooler 116 notifies the printing workflow processing unit 112b of the printing attribute information (S830).

The printing workflow processing unit 112b edits the received printing attribute information to generate printing attribute information to be reported to the printer (S831). The printing workflow processing unit 112b executes the following processing for attribute information of setting items where the "Editing Flag" field in the attribute value table is set to "TRUE" in the printing attribute information, included in the printing attribute information received from the printing spooler 116. If the type of the attribute information is Type 1, the attribute value of the printing attribute information is overwritten with the attribute value corresponding to the setting value set in the printing confirmed information. If the type of the setting item where the "Editing Flag" field in the attribute value table is set to "TRUE" is Type 2, the attribute value of the printing attribute information is overwritten with the attribute value indicated by the "Attribute Value" field 705 in the table 701 depicted in Fig. 7. If the type of the setting item where the "Editing Flag" field in the attribute value table is set to "TRUE" is Type 3, the attribute value of the printing attribute information remains unchanged.

The printing workflow processing unit 112b generates intermediate image data for printing (S832).

The printing workflow processing unit 112b generates intermediate image data for printing according to the printing confirmed information. For example, if page aggregation is set to 2-in-1 in the printing confirmed information, the printing workflow processing unit 112b generates intermediate image data by laying out the original image data for two pages onto a single page.

The printing workflow processing unit 112b generates PDL data for printing based on the intermediate image data for printing (S833). The PDL data generated in S833 is data in PDF or PWG-Raster format.

The printing workflow processing unit 112b notifies the printing spooler 116 of the generated PDL data and printing attribute information (S834). The printing spooler 116 generates print data based on the received PDL data and printing attribute information (S835). The printing spooler 116 sends the print data to the cloud print service 121 (S836). The cloud print service 121 sends the print data to the printer 104 (S837).

Note that, in the present embodiment, it is assumed that PDL data and printing attribute information are sent to the printing spooler 116 in S834. Alternatively, after S831, printing attribute information may be sent to the printing spooler 116 first, and in S384, the printing workflow processing unit 112b may send PDL data to the printing spooler 116.

According to the present embodiment described above, the printing workflow processing unit 112b of the printing settings extension app 112 can change the attribute values without using the API of the OS, and can obtain the intended print results without depending on the type of the OS.

### Third Embodiment

The first embodiment has described an example in which the entire image processing is performed on the client PC side for printing settings items where editing and processing of intermediate image data has occurred during preview display.

A third embodiment will now describe an example of switching between executing image processing on the client PC side and executing it on the printer side according to the type and capabilities of the printer.

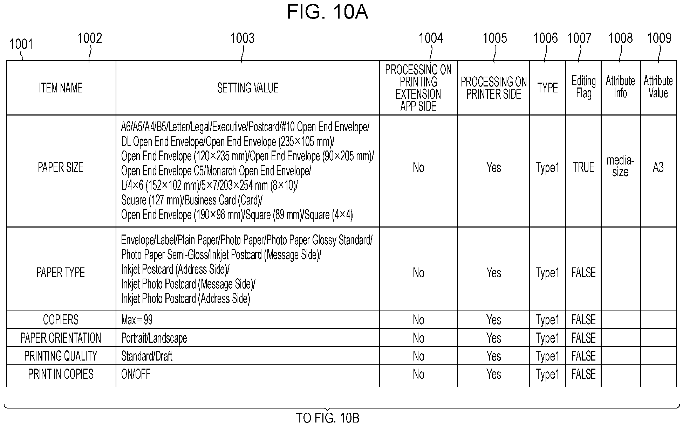

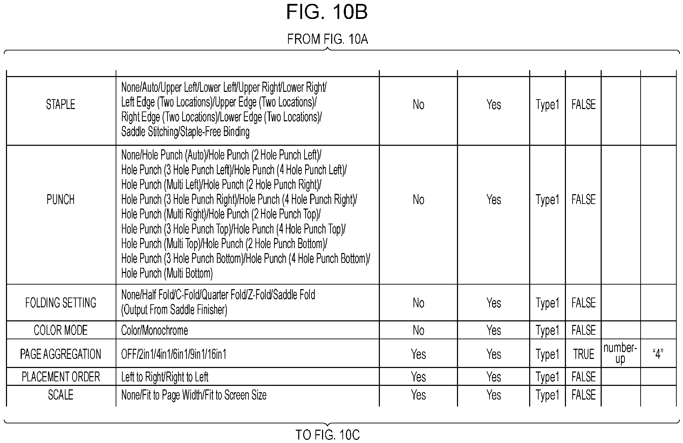

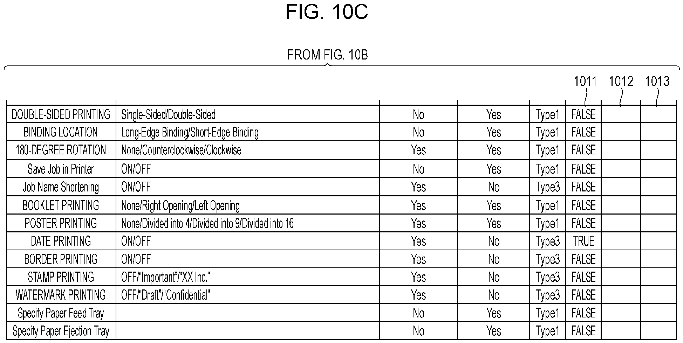

Specific processing according to the present embodiment will be described using Figs. 3, 6B, 9A, 9B, 10A to 10C, 11, 14A, and 14B.

Note that only differences from the first embodiment will be described here. The system configuration and hardware configuration are the same as those in the first embodiment with some exceptions, and their description is omitted.

Additionally, preview display according to the present embodiment is equivalent to the sequence illustrated in Figs. 3A to 3C, and its description will be omitted.

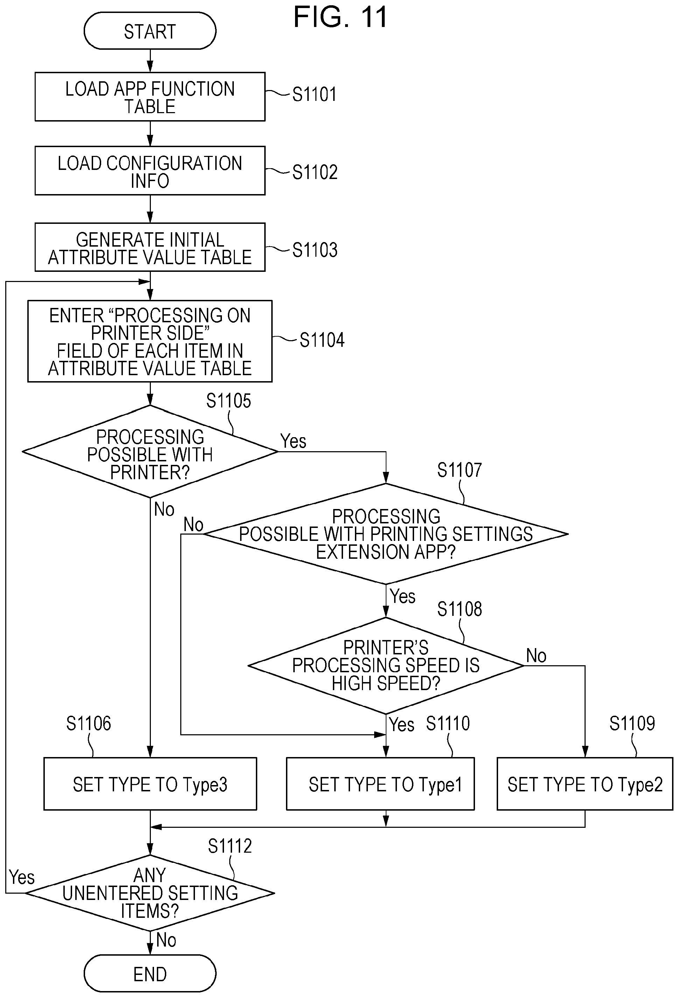

As differences from the embodiments described earlier, the attribute value table generation (S14003 in Fig. 14A) and the attribute value change determination process (S327 in Fig. 3C) will be described in detail using Figs. 11 and 6B.

This example will discuss the case where, when the printer 104 has the same functionality as the printing settings extension app 112, it is switched between executing image processing on the client PC side and executing it on the printer side according to the type and capabilities of the printer.

First, the attribute value table generation (S14003) will be described in detail using Fig. 11. The process illustrated in Fig. 11 is realized by the CPU 212 executing a program of the printing settings extension app 112.

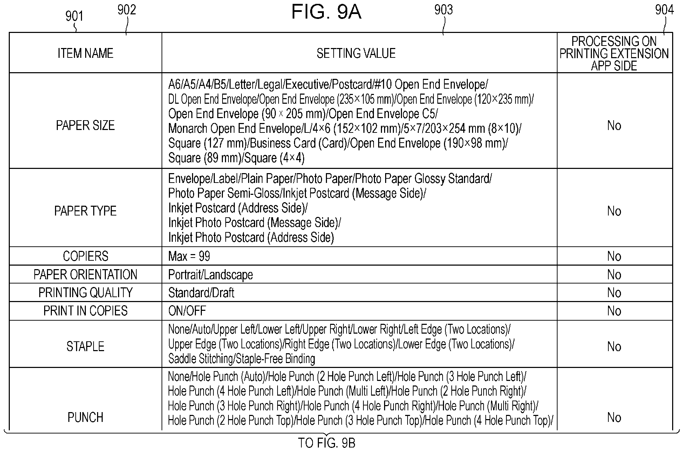

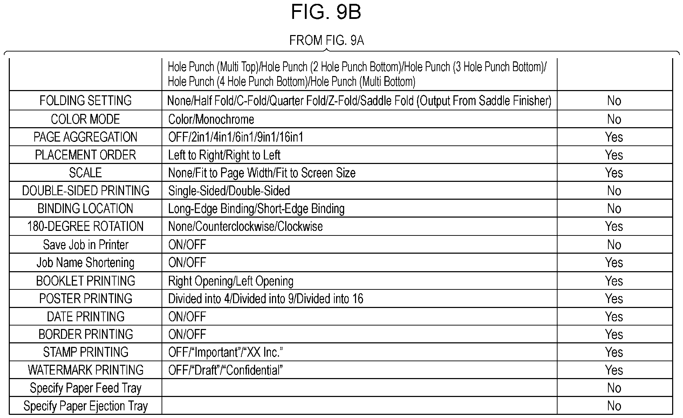

The printing workflow processing unit 112b loads the app function table that the printing settings extension app 112 stores in the program (S1101). Figs. 9A and 9B illustrate an app function table 901 that the printing settings extension app 112 stores in the third embodiment.

The app function table 901 predefines an "Information About Printing Settings Items" field 902, a "Setting Value Information for Each Printing Settings Item" field 903, and a "Processing on the Printing Settings Extension App Side for Each Printing Settings Item" field 904.

Next, the printing workflow processing unit 112b loads the configuration information of the printer (S1102).

Next, the printing workflow processing unit 112b generates an attribute value table 1001 based on the loaded app function table 901 (S1103). The attribute value table 1001 is provided with areas for information inherited from the app function table 901 as well as areas for new information.

The information inherited from the app function table 901 includes an "Information About Printing Settings Items" field 1002, a "Setting Value Information for Each Printing Settings Item" field 1003, and a "Processing on the Printing Settings Extension App Side for Each Printing Settings Item" field 1004.

Additionally, as areas for new information, there are "Processing on the Printer Side for Each Printing Settings Item" field 1005, a "Type" field 1006, a "Preview Editing Flag" field 1007, an "Attribute Information" field 1008, and an "Attribute Value" field 1009.

Information in the fields 1005 to 1009 are blank in the initial state upon generation. The fields 1005 and 1006 are set when the printing workflow processing unit 112b executes the processing in S1104 to S1112.

In addition, for information in the field 1007, the printing workflow processing unit 112b sets information according to the editing status during preview. Note that the methods of setting the editing flag, attribute information, and attribute value are the same as those in the first embodiment, and their description will be omitted.

The printing workflow processing unit 112b enters information based on the capability information loaded in S1102 to the "Processing on the Printer Side" field 1005 for each setting item in the attribute value table 1001 (S1104). The configuration information is the capability information of the printer 104 acquired from the cloud print service 121. For items containing setting items and setting values in the capability information, "YES" is set to the field 1005 as a function that the printer can perform processing.

Thereafter, the printing workflow processing unit 112b executes the processing described in S1105 to S1110 for each setting item.

The printing workflow processing unit 112b determines whether the processing is possible with the printer when information is entered based on the capability information (S1105).

If the processing is not possible with the printer, the printing workflow processing unit 112b sets the type of the setting item to Type 3 (S 1 106). The printing workflow processing unit 112b determines whether there are any unprocessed setting items (S1112). If there are unprocessed setting items, the printing workflow processing unit 112b returns the process to S1104. In contrast, if there are no unprocessed setting items, the printing workflow processing unit 112b terminates the process illustrated in this flowchart.

If the processing is possible with the printer, the printing workflow processing unit 112b determines whether this setting item can be processed by the printing settings extension app 112 (S1107).

If the processing is not possible with the printing settings extension app 112, the printing workflow processing unit 112b advances the process to S1110. If the printing settings extension app 112 is able to perform the processing, the printing workflow processing unit 112b determines whether the processing speed of the printer 104 is high (S1108). S1108 is a determination of whether the printer 104 meets certain conditions. The certain conditions are, for example, that the number of printed sheets per unit time is greater than or equal to a certain number of sheets, that the image forming method is a certain method, and so on.

For example, a threshold of 20 sheets per minute for monochrome printing processing capacity is set as the printing processing speed, and it is determined to be high speed if the count is 20 sheets or more, and low speed if the count is less than 20 sheets.

In the case of determining the printing processing speed from a model name acquired from model information, the printing settings extension app 112 holds comparison information between model name and printing processing speed.

Alternatively, it is acceptable to have a determination criterion rather than a threshold that it is determined to be high speed if the printer is an electrophotographic printer, and low speed if the printer is an inkjet printer. This can be determined based on a model name acquired from model information or from information about whether to use ink or toner, acquired from the configuration information.

In the case of determining the printing method of the printer from a model name acquired from model information, the printing settings extension app 112 holds comparison information between model name and printer printing method.

Additionally, in the case of determining the image forming method from the information about whether to use ink or toner, acquired from the configuration information, the image forming method is determined as follows. The printing workflow processing unit 112b determines that the printer is an inkjet printer if there is "ink" in the IPP attribute marker_type, and determines that the printer is an electrophotographic printer if there is "electrophotographic" or "toner".

The determination from the information about whether to use ink or toner, acquired from the configuration information, may be performed by the following method. The printing workflow processing unit 112b determines that the printer is an inkjet printer if there is "ink" in the type of the IPP attribute printer_supply, and determines that the printer is an electrophotographic printer if there is "toner".

If the printing processing speed of the printer is high, the printing workflow processing unit 112b sets the type of the corresponding printing setting item to Type 1 (S1110).

Additionally, if the printing processing speed of the printer is less than the threshold, the printing workflow processing unit 112b sets the type of the corresponding setting item to Type 2 (51109).

For example, when there is processing on the printer side and the printing processing speed of the printer is greater than or equal to the threshold, Type 1 is recorded for the type of the attribute value changing method, like the "Page Aggregation" setting item in the attribute value table 1001.

Next, the IPP attribute value change determination process (S327) in the third embodiment will be described in detail using Fig. 6B. Note that the flowchart is the same as that in the first embodiment. Here, an example will be described in which the Print Ticket specifies "Paper Size: A4, Page Aggregation: 2-in-1, Date Printing: OFF", and the settings are changed to "Paper Size: A3, Page Aggregation: 4-in-1, Date Printing: ON" using the preview UI.

The printing workflow processing unit 112b reads out the attribute value table 1001 from the app's data storage area (S611).

The printing workflow processing unit 112b checks the "Preview Editing Flag" field 1007 for each setting item recorded in the attribute value table 1001 (S612).

Here, if the "Preview Editing Flag" field 1007 is "TRUE", the printing workflow processing unit 112b similarly checks the "Type" field 1006 recorded in the attribute value table 1001 (S613).

If the type of the setting item of interest is "Type 1", the printing workflow processing unit 112b sets attribute information and attribute values based on the confirmed printing settings information (S614). In the previous example, "Paper Size" and "Page Aggregation" corresponds to Type 1. For "Paper Size" and "Page Aggregation", the "Attribute Information" field 1008 and the "Attribute Value" field 1009 are set based on the confirmed printing settings information. The point different from the first embodiment is that "Page Aggregation" is classified as Type 1. Since "Page Aggregation" is Type 1, the attribute value is set to "4", corresponding to 4-in-1 after the setting has been changed in the preview UI.

If the type is "Type 2", the printing workflow processing unit 112b determines to change the attribute value to prevent the printer from editing the image (S615).

If the type is "Type 3", the printing workflow processing unit 112b determines not to change the IPP attribute value (S616).

The printing workflow processing unit 112b repeats S612 onwards if there are any unchecked setting items.

According to the present embodiment described above, the printing workflow processing unit 112b in the printing settings extension app 112 can switch between executing image processing on the client PC side and executing it on the printer side according to the type and capabilities of the printer.

### Other Embodiments

The present invention can also be realized by a process in which a program that realizes one or more functions of the above-described embodiments is supplied to a system or device via a network or storage medium, whereby one or more processors in the computer of the system or device read and execute the program. It can also be realized by a circuit (e.g., application-specific integrated circuit (ASIC)) that realizes one or more functions.

The invention is not limited to the above-described embodiments, and various changes and modifications can be made without departing from the scope of the invention. Accordingly, the claims are attached to make the scope of the invention public.

The implementation of the present invention makes it possible to obtain appropriate output results for functions that can be processed by both the printing settings extension app and the printing device.

While the present invention has been described with reference to embodiments, it is to be understood that the invention is not limited to the disclosed embodiments and that the appended claims define the scope of protection. The scope of the following claims is to be accorded the broadest interpretation so as to encompass all such modifications and equivalent structures and functions.

## Claims

1. A control method for an information processing apparatus (101), wherein the information processing apparatus is configured to store a printing settings application (112), display a printing settings screen (1201, 1202) for setting a printing settings value provided to a printer driver (111, 113), wherein the printer driver generates printing settings information in accordance with Internet Printing Protocol, the control method comprising:
acquiring to-be-printed intermediate image data provided by an operating system (114) of the information processing apparatus;
editing the acquired intermediate image data according to a setting value of a setting item set on the printing settings screen (1201, 1202);
sending print data based on the edited intermediate image data; and
sending a value different from the value set via the printing settings screen (1201, 1202) as the setting value of the setting item corresponding to the print data.

2. The control method according to claim 1, wherein the setting item is a setting item corresponding to a function of laying out the intermediate image data of a plurality of pages onto a single page.

3. The control method according to claim 1 or 2, wherein the printer driver (111, 113) is a printer driver provided by an operating system (OS) of the information processing apparatus (101).

4. The control method according to any of claims 1 to 3, wherein the printer driver (111, 113) is a printer driver that generates print data that can be printed by printers (104) of a plurality of models from a plurality of printer vendors.

5. The control method according to any preceding claim, wherein the value different from the value set via the printing settings screen (1201, 1202) is an attribute value defined in Internet Printing Protocol.

6. The control method according to claim 1, further comprising:
displaying a preview image based on a setting value set via the first printing settings screen (1201, 1202) and the to-be-printed intermediate image data;
accepting, after the preview image is displayed, a change to the setting value;
sending print data based on the intermediate image data; and
sending the accepted setting value.

7. A non-transitory computer-readable medium having stored thereon instructions, which when executed by one or more processors, cause the processors to implement a method according to any of claims 1-6.

8. An information processing apparatus (101) configured to store a printing settings application (112), display a printing settings screen (1201, 1202) for setting a printing settings value provided to a printer driver (111, 113), wherein the printer driver generates printing settings information in accordance with Internet Printing Protocol, the information processing apparatus (101) comprising:
acquiring means for obtaining to-be-printed intermediate image data provided by an operating system (114) of the information processing apparatus;
editing means for editing the acquired intermediate image data according to a setting value of a setting item set on the printing settings screen (1201, 1202);
first sending means for sending print data based on the edited intermediate image data; and
second sending means for sending a value different from the value set via the printing settings screen (1201, 1202) as the setting value of the setting item corresponding to the print data.
